# DEMANDE DE BREVET EUROPEEN

(11) **EP 4 762 918 A1**
(43) Date de publication de la demande: **24.06.2026**
(21) Numéro de dépôt: 25223760.7
(22) Date de dépôt: 16.12.2025
(51) Int. Cl.: A01G 9/02, A01G 9/12

(54) **DISPOSITIF D'OMBRAGE ET PROCEDE DE FABRICATION D'UN TEL DISPOSITIF D'OMBRAGE**

(30) Priorité: 19.12.2024 FR 2414686
(71) Demandeur: IDSB Ingenierie, 67720 Hoerdt (FR)
(72) Inventeur: HELMSTETTER, Didier, 67170 Olwisheim (FR); DUBOIS, Frédéric, 69720 Saint Laurent de Mure (FR)
(74) Mandataire: Cabinet Bleger-Rhein-Poupon

(57) **Abrégé**

L'invention concerne un dispositif d'ombrage (1) comportant, d'une part, un socle (2) en un matériau durci et, d'autre part, au moins deux tiges flexibles (3, 3a, 3b ; 4, 4a, 4b) qui comportent, chacune, une partie interne, s'étendant à l'intérieur du socle (2), ainsi qu'une partie externe (6) s'étendant dans le prolongement de la partie interne (5), à l'extérieur dudit socle (2) ainsi qu'au-dessus de ce socle (2).

Ce dispositif d'ombrage (1) est caractérisé en ce que la partie interne (5) desdites au moins deux tiges flexibles est noyée à l'intérieur du matériau durci du socle (2) et en ce qu'il comporte au moins un moyen de répulsion (7, 7a, 7b) de la partie externe (6) d'au moins une tige flexible, ceci par rapport à la partie externe (6) d'au moins une autre tige flexible.

## Description

### Domaine technique

La présente invention concerne un dispositif d'ombrage, un procédé de fabrication d'un tel dispositif d'ombrage ainsi qu'un procédé d'installation d'un tel dispositif d'ombrage.

Cette invention concerne le domaine de l'aménagement territorial et, plus particulièrement, le domaine de la fabrication des dispositifs qui sont conçus pour être implantés en milieu urbain ou rural et pour procurer de l'ombre aux personnes.

### Technique antérieure

On connait, d'ores et déjà, des dispositifs d'ombrage qui sont configurés pour fournir de l'ombre aux personnes, notamment en milieu urbain.

En particulier, par le document FR 3 132 314, on connait un dispositif d'ombrage qui comporte un socle, qui s'étend selon un axe vertical, et qui comporte un volume interne destiné à contenir un substrat de croissance végétale. Ce dispositif d'ombrage comporte, également, des tiges flexibles qui comportent, chacune, d'une part, une partie interne, qui s'étend à l'intérieur dudit socle, et qui est rendue solidaire dudit socle par l'intermédiaire de moyens de solidarisation et, d'autre part, une partie externe qui s'étend dans le prolongement de la partie interne d'une telle tige flexible, à l'extérieur dudit socle ainsi qu'au-dessus de ce socle. Ce dispositif comporte, encore, des moyens d'écartement pour écarter la partie externe des tiges flexibles par rapport à l'axe vertical d'extension du socle.

Les moyens de solidarisation, qui permettent de solidariser la partie interne des tiges flexibles et le socle, comportent au moins une plaque, qui est positionnée à l'intérieur du volume interne du socle, qui est fixée dans le volume interne du socle, et qui est munie de perçages qui sont traversés par la partie interne des tiges flexibles. De tels moyens de solidarisation sont complexes à concevoir, notamment en raison du fait qu'ils comportent une plaque dont les dimensions doivent être ajustées au socle et dont les perçages doivent permettre un passage et un maintien des tiges flexibles. De plus, ces moyens de solidarisation (plus particulièrement ladite au moins une plaque) nécessitent de faire appel à des personnes qualifiées pour leur conception et leur fabrication, notamment un métallier ou un serrurier. En outre, ces moyens de solidarisation sont complexes à mettre en œuvre étant donné qu'il convient de solidariser une telle plaque et ledit socle, ceci à l'intérieur du volume interne de ce socle.

En ce qui concerne les moyens d'écartement, ceux-ci comportent, d'une part, un premier jeu de câbles dont les câbles sont raccordés à la partie externe des tiges flexibles et, d'autre part, un système de mise sous tension des câbles de ce premier jeu de câbles permettant d'exercer une traction sur ces câbles et de maintenir cette traction sur ces câbles. Ces moyens d'écartement sont complétés par un deuxième jeu de câbles dont les câbles raccordent la partie externe d'une tige flexible à la partie externe d'une autre tige flexible. Ce deuxième jeu de câble permet de bloquer la déformation maximale de ces tiges flexibles.

Ces moyens d'écartement sont complexes, comportent de nombreux éléments (plusieurs jeux de câbles, système de mise sous tension), nécessitent une mise en œuvre complexe et délicate (notamment pour la mise sous tension des câbles du premier jeu de câbles), ne permettent pas de garantir un maintien pérenne des câbles sous tension, et nécessitent des moyens additionnels pour éviter une trop grande déformation des tiges flexibles, notamment sous l'effet du système de mise sous tension et/ou du poids de la végétation.

La présente invention se veut de remédier aux inconvénients des dispositifs de verrouillage électromagnétique de l'état de la technique.

### Exposé de l'invention

A cet effet, l'invention concerne un dispositif d'ombrage comportant, d'une part, un socle, qui est en un matériau durci, et qui comporte un volume interne destiné à contenir un substrat de croissance végétale et, d'autre part, au moins deux tiges flexibles qui comportent, chacune, une partie interne, qui s'étend à l'intérieur du socle, et qui est solidaire dudit socle ainsi qu'une partie externe qui s'étend dans le prolongement de la partie interne d'une telle tige flexible, à l'extérieur dudit socle ainsi qu'au-dessus de ce socle. Ce dispositif d'ombrage est caractérisé par le fait que la partie interne desdites au moins deux tiges flexibles est noyée à l'intérieur du matériau durci du socle tandis que le dispositif d'ombrage comporte, encore, d'une part, une armature dont au moins une partie est noyée à l'intérieur du matériau durci du socle et, d'autre part, au moins un moyen de répulsion qui est configuré pour repousser la partie externe d'au moins une tige flexible parmi lesdites au moins deux tiges flexibles, ceci par rapport à la partie externe d'au moins une autre tige flexible parmi lesdites au moins deux tiges flexibles ou par rapport au socle.

Selon un premier type de réalisation, le socle comporte, d'une part, deux plaques parallèles en un matériau durci et, d'autre part, des moyens de raccordement qui sont configurés pour raccorder ces deux plaques parallèles entre elles.

Selon un premier mode de réalisation de ce premier type de réalisation, la partie interne d'au moins une tige flexible parmi lesdites au moins deux tiges flexibles est noyée à l'intérieur d'une première plaque parmi les deux plaques du socle tandis que ledit au moins un moyen de répulsion est configuré pour repousser la partie externe de ladite au moins une tige flexible par rapport à une deuxième plaque parmi les deux plaques du socle.

Selon un deuxième mode de réalisation de ce premier type de réalisation, d'une part, la partie interne d'au moins une première tige flexible parmi lesdites au moins deux tiges flexibles est noyée à l'intérieur d'une première plaque parmi les deux plaques du socle, d'autre part, la partie interne d'au moins une deuxième tige flexible parmi lesdites au moins deux tiges flexibles est noyée à l'intérieur d'une deuxième plaque parmi les deux plaques du socle et, d'autre part encore, ledit au moins un moyen de répulsion est configuré pour repousser la partie externe de ladite au moins une première tige flexible par rapport à la partie externe de ladite au moins une deuxième tige flexible.

Selon un deuxième type de réalisation, le socle, d'une part, s'étend selon un axe sensiblement vertical, d'autre part, présente la forme d'un tube, qui s'étend selon ledit axe, et qui présente une paroi tubulaire et, d'autre part encore, présente une section transversale qui est circulaire ou polygonale.

Dans ce deuxième type de réalisation, d'une part, la partie interne d'au moins une première tige flexible parmi lesdites au moins deux tiges flexibles est noyée à l'intérieur de la paroi tubulaire, d'autre part, la partie interne d'au moins une deuxième tige flexible parmi lesdites au moins deux tiges flexibles est noyée à l'intérieur de la paroi tubulaire et, d'autre part encore, ledit au moins un moyen de répulsion est configuré pour repousser la partie externe de ladite au moins une première tige flexible par rapport à la partie externe de ladite au moins une deuxième tige flexible.

Selon une autre caractéristique, ledit au moins moyen de répulsion comporte, d'une part, une barre rigide qui présente une longueur qui est supérieure à la distance entre la partie interne de ladite au moins une première tige flexible parmi lesdites au moins deux tiges flexibles et la partie interne de ladite au moins une deuxième tige flexible parmi lesdites au moins deux tiges flexibles et, d'autre part, des moyens de fixation qui sont configurés pour fixer ladite barre rigide sur la partie externe de ladite au moins une première tige flexible ainsi que sur la partie externe de ladite au moins une deuxième tige flexible.

L'invention concerne, également, un procédé de fabrication d'un dispositif d'ombrage qui présente les caractéristiques décrites ci-dessus. Ce procédé de fabrication comporte :
- une étape de fabrication d'une armature qui comporte, d'une part, une première partie d'armature qui comporte un premier ensemble d'une pluralité de tiges flexibles qui comportent, chacune, une partie interne et une partie externe ainsi qu'une pluralité de barres, d'autre part, une deuxième partie d'armature qui comporte un deuxième ensemble d'une pluralité de tiges flexibles qui comportent, chacune, une partie interne et une partie externe ainsi qu'une pluralité de barres et, d'autre part encore, des éléments de raccordement qui sont configurés pour raccorder la première partie d'armature et la deuxième partie d'armature ;
- une première étape de positionnement qui consiste à positionner la première partie d'armature à l'intérieur d'un moule ;
- une première étape de coulage qui consiste à couler un matériau durcissable à l'intérieur du moule, ceci en sorte de noyer la partie interne des tiges flexibles ainsi que la pluralité de barres de la première partie d'armature à l'intérieur de ce matériau durcissable ;
- une première étape de durcissement qui consiste à faire durcir ou à laisser durcir le matériau durcissable pour l'obtention d'une première plaque ;
- une étape de retournement qui consiste à retourner l'armature ainsi que la première plaque ;
- une deuxième étape de positionnement qui consiste à positionner la deuxième partie d'armature à l'intérieur d'un moule ;
- une deuxième étape de coulage qui consiste à couler un matériau durcissable à l'intérieur du moule, ceci en sorte de noyer la partie interne des tiges flexibles ainsi que la pluralité de barres de la deuxième partie d'armature à l'intérieur de ce matériau durcissable ;
- une deuxième étape de durcissement qui consiste à faire durcir ou à laisser durcir le matériau durcissable pour l'obtention d'une deuxième plaque, la première plaque et la deuxième plaque définissant un socle.

De manière alternative, l'invention concerne un procédé de fabrication d'un dispositif d'ombrage qui comporte :
- une étape de fabrication d'une armature tubulaire qui comporte, d'une part, une pluralité de tiges flexibles qui comportent, chacune, une partie interne et une partie externe et, d'autre part, une pluralité d'éléments de raccordement qui sont solidaires de la partie interne desdites tiges flexibles ;
- une étape de positionnement qui consiste à positionner au moins la partie interne des tiges flexibles et les éléments de raccordement de ladite d'armature tubulaire, ceci à l'intérieur d'un moule qui comporte deux parois tubulaires, coaxiales et espacées ;
- une étape de coulage qui consiste à couler un matériau durcissable à l'intérieur du moule, ceci en sorte de noyer la partie interne des tiges flexibles ainsi que les éléments de raccordement de l'armature tubulaire à l'intérieur de ce matériau durcissable ;
- une étape de durcissement qui consiste à faire durcir ou à laisser durcir le matériau durcissable pour l'obtention d'une paroi tubulaire d'un tube définissant un socle.

Finalement, l'invention concerne un procédé d'installation d'un dispositif d'ombrage sur site. Ce procédé d'installation est caractérisé par le fait que, d'une part, le dispositif d'ombrage présente les caractéristiques décrites ci-dessus et/ou est obtenu par la mise en œuvre du procédé de fabrication tel que décrit ci-dessus et, d'autre part, le procédé d'installation comporte une étape d'implantation qui consiste à implanter le dispositif d'ombrage sur site et, ensuite, une étape de répulsion qui consiste à repousser la partie externe d'au moins une tige flexible dont la partie interne est noyée dans la première plaque en un matériau durci, ceci par rapport à la partie externe d'au moins une autre tige flexible dont la partie interne est noyée dans la deuxième plaque en un matériau durci.

De manière alternative, l'invention concerne un procédé d'installation d'un dispositif d'ombrage sur site, caractérisé par le fait que, d'une part, le dispositif d'ombrage présente les caractéristiques décrites ci-dessus et/ou est obtenu par la mise en œuvre du procédé de fabrication tel que décrit ci-dessus et, d'autre part, le procédé d'installation comporte une étape d'implantation qui consiste à implanter le dispositif d'ombrage sur site et, ensuite, une étape de répulsion qui consiste à repousser la partie externe d'au moins une tige flexible dont la partie interne est noyée dans la paroi tubulaire du tube définissant le socle, ceci par rapport par rapport à la partie externe d'au moins une autre tige flexible dont la partie interne est noyée dans la paroi tubulaire du tube définissant le socle.

### Résumé de l'invention

Ainsi, l'invention concerne un dispositif d'ombrage qui comporte un socle ainsi qu'au moins deux tiges flexibles dont la partie interne est noyée à l'intérieur du matériau durci du socle. Ces caractéristiques permettent, avantageusement, de faciliter la fabrication d'un tel dispositif d'ombrage, d'améliorer la liaison entre les tiges flexibles et le socle, de renforcer la résistance du dispositif d'ombrage, et d'éviter d'avoir recours à une main d'œuvre spécialisée, notamment à un serrurier ou à un métallier.

Le dispositif d'ombrage comporte des moyens de répulsion qui sont de conception simple, de mise en œuvre rapide et efficace, et permettent de garantir aussi bien le positionnement que le maintien pérenne dans cette position des parties externes des tiges flexibles

L'invention concerne, également, un procédé de fabrication d'un tel dispositif d'ombrage. Ce procédé comporte des étapes (notamment de fabrication d'une armature, de coulage d'un matériau durcissable dans un moule dans lequel l'armature est positionnée, de durcissement du matériau durcissable) qui présentent les avantages d'être mises en œuvre en usine, de recourir à des technologies maîtrisées et aisées à mettre en œuvre, de pouvoir fabriquer rapidement et industriellement un tel dispositif d'ombrage, là encore sans nécessiter l'intervention d'une main d'œuvre spécialisée. Ces étapes permettent, également, de préfabriquer une grande partie d'un tel dispositif d'ombrage en usine.

### Brève description des dessins

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels
[Fig. 1] est une vue schématisée et de côté d'un dispositif d'ombrage qui est selon l'invention et qui est conforme à un premier mode de réalisation d'un premier type de réalisation.
[Fig. 2] est une vue schématisée et de côté d'un dispositif d'ombrage qui est selon l'invention et qui est conforme à un deuxième mode de réalisation du premier type de réalisation.
[Fig. 3] est une vue schématisée et en perspective d'un dispositif d'ombrage qui est selon l'invention, qui est illustré figure 2, et qui est conforme au deuxième mode de réalisation du premier type de réalisation.
[Fig. 4] est une vue schématisée et en perspective d'un dispositif d'ombrage qui est selon l'invention et qui est conforme à une variante de réalisation du deuxième mode de réalisation du premier type de réalisation.
[Fig. 5] est une vue schématisée, en perspective et en détail d'un moyen de répulsion que comporte le dispositif d'ombrage conforme à l'invention.
[Fig. 6] est une vue schématisée, en perspective et en détail de moyens de solidarisation de la partie externe d'au moins deux tiges flexibles du dispositif d'ombrage conforme à l'invention.
[Fig. 7] est une vue schématisée et de côté d'un dispositif d'ombrage qui est selon l'invention et qui est conforme à un deuxième type de réalisation.
[Fig. 8] est une vue schématisée et de dessus d'un dispositif d'ombrage qui est selon l'invention, et qui est conforme au deuxième type de réalisation.

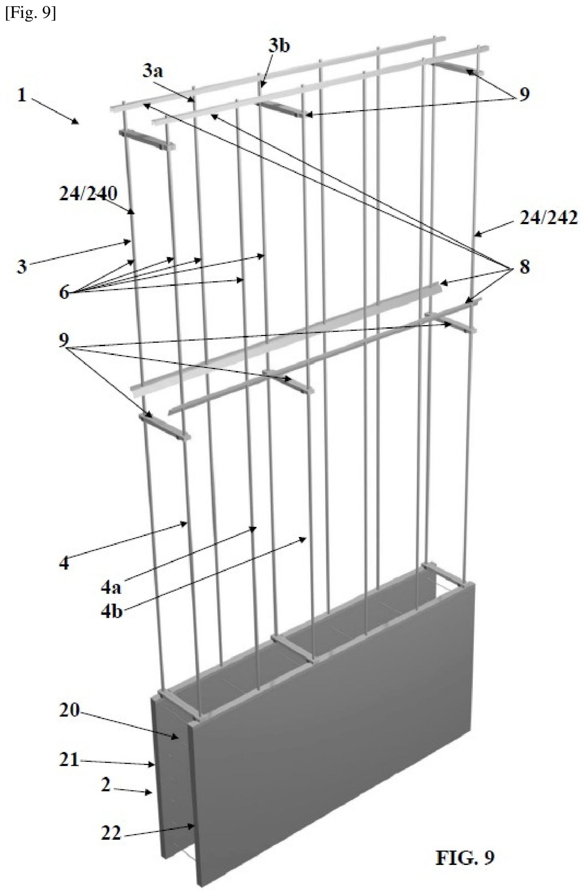

[Fig. 9] est une vue schématisée et en perspective d'un dispositif d'ombrage qui est obtenu par la mise en œuvre du procédé de fabrication qui est conforme à l'invention.

### Description détaillée

En référence notamment aux figures susmentionnées, la présente invention concerne le domaine de l'aménagement territorial et, plus particulièrement, le domaine de la fabrication des dispositifs qui sont conçus pour être implantés en milieu urbain ou rural et pour procurer de l'ombre aux personnes.

L'invention concerne, alors, un dispositif d'ombrage 1 qui est configuré pour fournir de l'ombre à des personnes, notamment à des passants.

Ce dispositif d'ombrage 1 comporte un socle 2 qui est en un matériau durci (plus particulièrement en béton ou analogue) et qui comporte un volume interne 20 destiné à contenir un substrat de croissance végétale S.

Ce socle 2 est configuré pour être positionné à même le sol 12 (notamment directement sur la surface du sol, par exemple sur la terre ou sur un revêtement de type pavés, enrobé ou autre), sur une fondation (au moins en partie enterrée), ou pour être au moins en partie enterré.

Ce dispositif d'ombrage 1 comporte encore, au moins deux tiges flexibles (3, 3a, 3b ; 4, 4a, 4b) qui comportent, chacune, une partie interne 5, qui s'étend à l'intérieur du socle 2, et qui est solidaire dudit socle 2.

Lesdites au moins deux tiges flexibles (3, 3a, 3b ; 4, 4a, 4b) comportent, également, chacune, une partie externe 6 qui s'étend dans le prolongement de la partie interne 5 d'une telle tige flexible (3, 3a, 3b ; 4, 4a, 4b), ceci à l'extérieur dudit socle 2 ainsi qu'au-dessus de ce socle 2.

Ces tiges flexibles (3, 3a, 3b ; 4, 4a, 4b) peuvent être en un matériau métallique (plus particulièrement en acier, notamment galvanisé ou inoxydable), en un matériau polymère, en un matériau composite (plus particulièrement contenant des fibres de verre ou autre) ou autre.

Selon l'invention, la partie interne 5 desdites au moins deux tiges flexibles (3, 3a, 3b ; 4, 4a, 4b) est noyée à l'intérieur du matériau durci du socle 2 tandis que le dispositif d'ombrage 1 comporte au moins un moyen de répulsion (7, 7a, 7b) qui est configuré pour repousser la partie externe 6 d'au moins une tige flexible (3, 3a, 3b ; 4, 4a, 4b) parmi lesdites au moins deux tiges flexibles (3, 3a, 3b ; 4, 4a, 4b), ceci par rapport à la partie externe 6 d'au moins une autre tige flexible (4, 4a, 4b ; 3, 3a, 3b) parmi lesdites au moins deux tiges flexibles (3, 3a, 3b ; 4, 4a, 4b) ou par rapport au socle 2.

Selon un premier type de réalisation, ledit socle 2 comporte, d'une part, deux plaques parallèles (21 ; 22) en un matériau durci et, d'autre part, des moyens de raccordement 23 qui sont configurés pour raccorder ces deux plaques parallèles (21 ; 22) entre elles.

Ainsi, dans ce premier type de réalisation, le socle 2 comporte deux plaques parallèles (21 ; 22), en particulier une première plaque 21 et une deuxième plaque 22, qui est parallèle à la première plaque 21.

Ces deux plaques parallèles (21 ; 22) sont espacées l'une 21 par rapport à l'autre 22, ceci en sorte de définir le volume interne 20 tel que mentionné ci-dessus.

De manière additionnelle, le dispositif d'ombrage 1 (plus particulièrement le socle 2 de ce dispositif d'ombrage 1) comporte une armature 24 dont au moins une partie est noyée à l'intérieur du matériau durci du socle 2. Cette armature 24 comporte, d'une part, une première partie d'armature 240, qui s'étend à l'intérieur de la première plaque 21, et qui comporte au moins la partie interne 5 d'au moins une première tige flexible (3, 3a, 3b) parmi lesdites au moins deux tiges flexibles (3, 3a, 3b ; 4, 4a, 4b) ainsi qu'au moins une barre 241 (plus particulièrement une pluralité de barres, notamment agencées sous la forme d'un treillis), qui peut former un angle (notamment droit ou nul) avec ladite au moins une première tige flexible (3, 3a, 3b), et qui peut être solidaire de ladite au moins une première tige flexible (3, 3a, 3b), d'autre part, une deuxième partie d'armature 242, qui s'étend à l'intérieur de la deuxième plaque 22, et qui comporte au moins la partie interne 5 d'au moins une deuxième tige flexible (4, 4a, 4b) parmi lesdites au moins deux tiges flexibles (3, 3a, 3b ; 4, 4a, 4b) ainsi qu'au moins une barre 243 (plus particulièrement une pluralité de barres, notamment agencées sous la forme d'un treillis), qui peut former un angle (notamment droit ou nul) avec ladite au moins une deuxième tige flexible (4, 4a, 4b), et qui peut être solidaire de ladite au moins une deuxième tige flexible (4, 4a, 4b), et, d'autre part encore, les moyens de raccordement 23, qui sont alors configurés pour raccorder la première partie d'armature 240 (plus particulièrement ladite au moins une barre 241 de cette première partie d'armature 240) et la deuxième partie d'armature 242 (plus particulièrement ladite au moins une barre 243 de cette deuxième partie d'armature 242), et qui sont solidaires de ladite première partie d'armature 240 (plus particulièrement de ladite au moins une barre 241 de cette première partie d'armature 240) ainsi que de ladite deuxième partie d'armature 242 (plus particulièrement ladite au moins une barre 243 de cette deuxième partie d'armature 242).

De tels moyens de raccordement 23 peuvent être constitués par des tiges, des barres ou des épingles.

Tel que mentionné ci-dessus, le dispositif d'ombrage 1 comporte, d'une part, au moins deux tiges flexibles (3, 3a, 3b ; 4, 4a, 4b) qui comportent, chacune, une partie interne 5 ainsi qu'une partie externe 6 et, d'autre part, au moins un moyen de répulsion (7, 7a, 7b) qui est configuré pour repousser la partie externe 6 d'au moins une tige flexible (3, 3a, 3b ; 4, 4a, 4b) parmi lesdites au moins deux tiges flexibles (3, 3a, 3b ; 4, 4a, 4b), ceci par rapport à la partie externe 6 d'au moins une autre tige flexible (4, 4a, 4b ; 3, 3a, 3b) parmi lesdites au moins deux tiges flexibles (3, 3a, 3b ; 4, 4a, 4b) ou par rapport au socle 2.

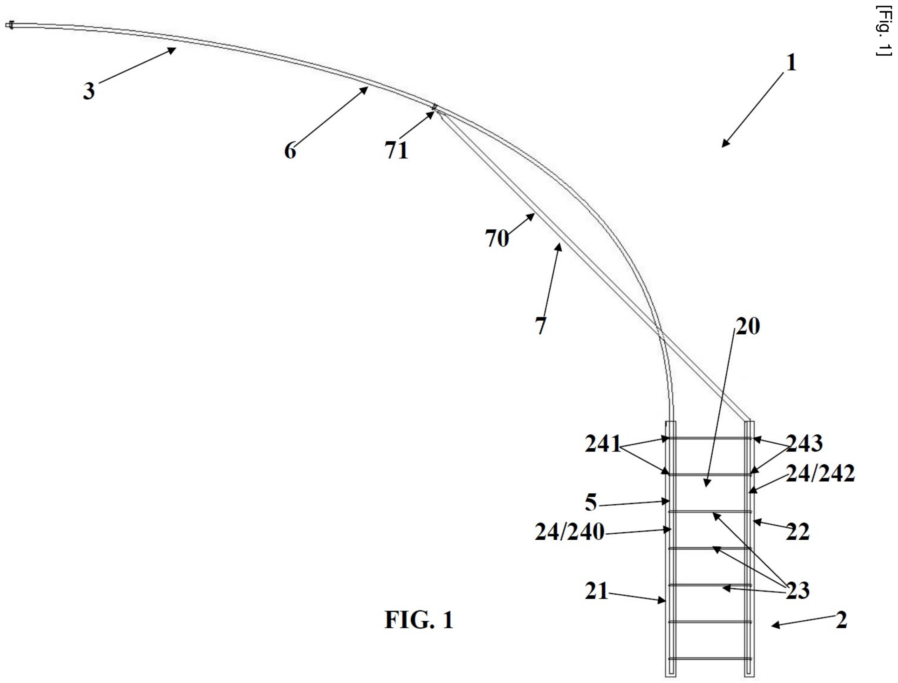

A ce propos, on observera qu'un premier mode de réalisation de ce premier type de réalisation a été illustré figure 1 et concerne un dispositif d'ombrage 1 dans lequel la partie interne 5 d'au moins une tige flexible (3, 3a, 3b) parmi lesdites au moins deux tiges flexibles (3, 3a, 3b) est noyée à l'intérieur de la première plaque 21 du socle 2 parmi les deux plaques (21 ; 22) du socle 2, plus particulièrement à l'intérieur du matériau durci de cette première plaque 21 du socle 2. La partie externe 6 de ladite au moins une telle tige flexible (3, 3a, 3b) s'étend, alors, dans le prolongement de la partie interne 5 d'une telle tige flexible (3, 3a, 3b), à l'extérieur dudit socle 2 ainsi qu'au-dessus de ce socle 2 (plus particulièrement à l'extérieur de la première plaque 21 dudit socle 2 et au-dessus de cette première plaque 21 dudit socle 2).

Selon ce premier mode de réalisation illustré figure 1, ledit au moins un moyen de répulsion (7, 7a, 7b) est configuré pour repousser la partie externe 6 de ladite au moins une tige flexible (3, 3a, 3b) parmi lesdites au moins deux tiges flexibles (3, 3a, 3b) et dont la partie interne 5 est noyée à l'intérieur de la première plaque 21 du socle 2, ceci par rapport au socle 2, plus particulièrement par rapport à la deuxième plaque 22 du socle 2 parmi les deux plaques (21 ; 22) du socle 2. Un tel moyen de répulsion (7, 7a, 7b), d'une part, est interposé entre la partie externe 6 de ladite au moins une tige flexible (3, 3a, 3b) et la deuxième plaque 22 du socle 2 et, d'autre part, prend appui contre cette partie externe 6 de ladite au moins une tige flexible (3, 3a, 3b) ainsi que contre cette deuxième plaque 22 du socle 2.

A ce propos, on observera que, dans ce premier mode de réalisation, ledit au moins un moyen de répulsion (7, 7a, 7b) comporte, d'une part, une barre rigide 70 (notamment télescopique) qui présente une longueur qui est supérieure à la distance entre la deuxième plaque 22 et la partie interne 5 de ladite au moins une tige flexible (3, 3a, 3b) parmi lesdites au moins deux tiges flexibles (3, 3a, 3b) et, d'autre part, des moyens de fixation 71. Ces moyens de fixation 71 sont configurés pour fixer ladite barre rigide 70, d'une part, sur la partie externe 6 de ladite au moins une tige flexible (3, 3a, 3b) qui est parmi lesdites au moins deux tiges flexibles (3, 3a, 3b) et dont la partie interne 5 est noyée à l'intérieur de la première plaque 21 du socle 2 et, d'autre part, sur la deuxième plaque 22 parmi les deux plaques (21 ; 22) du socle 2.

A ce propos, on observera que de tels moyens de fixation 71 peuvent comporter, d'une part, une platine de fixation 710 qui comporte au moins un trou traversant 711 qui est traversé par la partie externe 6 de ladite au moins une tige flexible (3, 3a, 3b), d'autre part, une bride de fixation 712 qui est configurée pour fixer une telle partie externe 6 de ladite au moins une tige flexible (3, 3a, 3b) sur la platine de fixation 710 et, d'autre part encore, un système de fixation 713 (notamment sous la forme d'un boulon ou analogue) qui est configuré pour fixer la barre rigide 70 sur la platine de fixation 710.

Selon un mode de réalisation particulier, la platine de fixation 710 peut comporter, d'une part, une première aile latérale qui reçoit la bride de fixation 712, d'autre part, une deuxième aile latérale qui reçoit le système de fixation 713 et, d'autre part encore, une aile centrale, qui est interposée entre la première aile latérale et la deuxième aile latérale, à partir de laquelle ladite première aile latérale et ladite deuxième aile latérale s'étendent, et qui comporte ledit au moins un trou traversant 711. Une telle platine de fixation 710 peut adopter une forme en « Z ».

Une variante particulière de réalisation de ce premier mode de réalisation de ce premier type de réalisation consiste en ce que le dispositif d'ombrage 1 comporte une pluralité de tiges flexibles (3, 3a, 3b) qui comportent, chacune, d'une part, une partie interne 5 qui est noyée à l'intérieur de la première plaque 21 du socle 2 parmi les deux plaques (21 ; 22) du socle 2, plus particulièrement à l'intérieur du matériau durci de cette première plaque 21 du socle 2 et, d'autre part, une partie externe 6 qui s'étend dans le prolongement de la partie interne 5 d'une telle tige flexible (3, 3a, 3b), à l'extérieur dudit socle 2 ainsi qu'au-dessus de ce socle 2 (plus particulièrement à l'extérieur de la première plaque 21 dudit socle 2 et au-dessus de cette première plaque 21 dudit socle 2). Le dispositif d'ombrage 1 comporte, alors, une pluralité de moyens de répulsion (7, 7a, 7b) qui sont configurés, chacun, pour repousser la partie externe 6 d'au moins l'une des tiges flexibles (3, 3a, 3b) par rapport à la deuxième plaque 22 du socle 2.

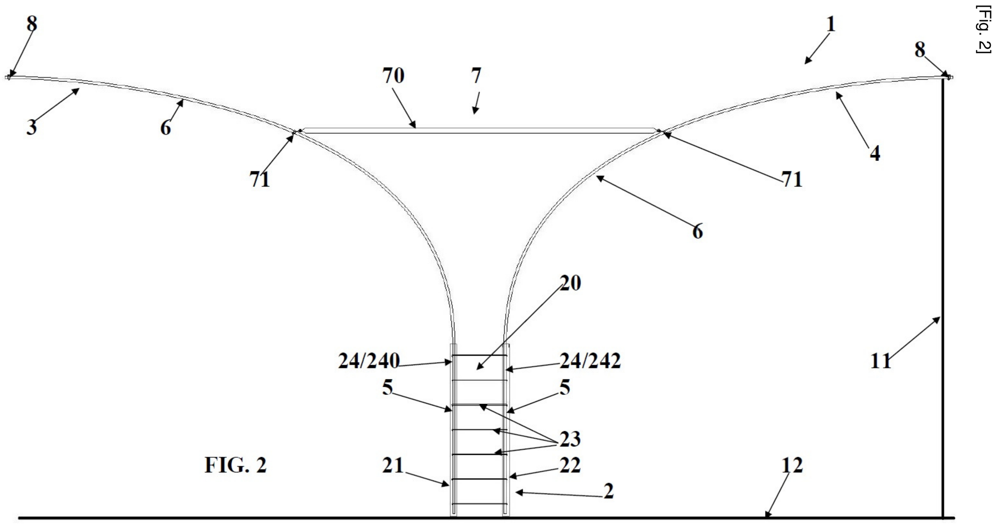

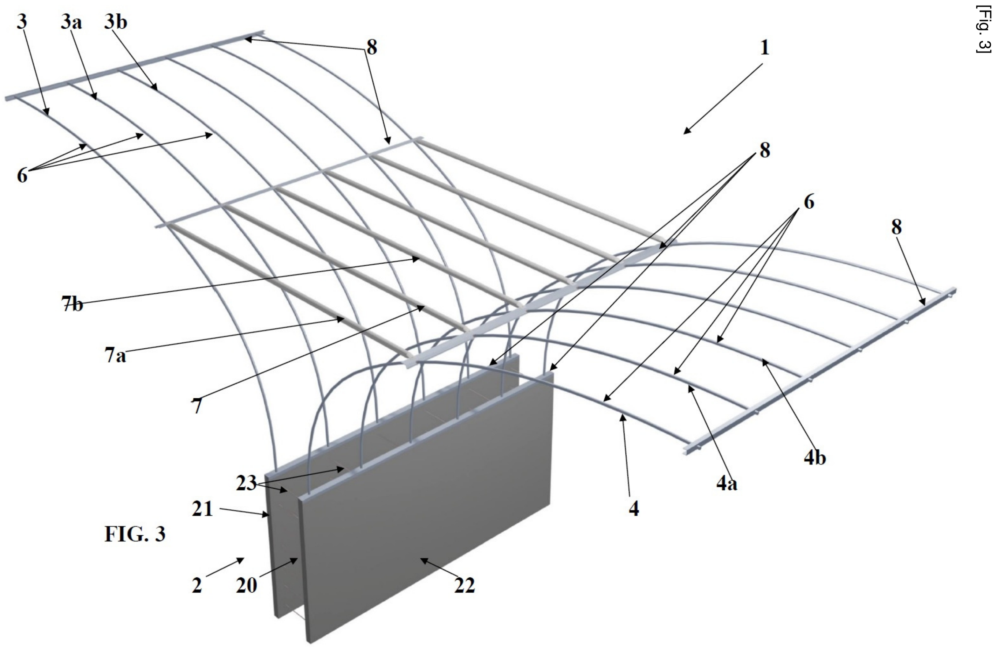

Un deuxième mode de réalisation de ce premier type de réalisation a été illustré figures 2 à 4 et concerne un dispositif d'ombrage 1 dans lequel, d'une part, la partie interne 5 d'au moins une première tige flexible (3, 3a,3b) parmi lesdites au moins deux tiges flexibles (3, 3a, 3b ; 4, 4a, 4b) est noyée à l'intérieur de la première plaque 21 du socle 2 parmi les deux plaques (21 ; 22) du socle 2. D'autre part, dans ce dispositif d'ombrage 1, la partie interne 5 d'au moins une deuxième tige flexible (4, 4a, 4b) parmi lesdites au moins deux tiges flexibles (3, 3a, 3b ; 4, 4a, 4b) est noyée à l'intérieur de la deuxième plaque 22 du socle 2 parmi les deux plaques (21 ; 22) du socle 2.

D'autre part encore, dans ce dispositif d'ombrage 1, ledit au moins un moyen de répulsion (7, 7a, 7b) est configuré pour repousser la partie externe 6 de ladite au moins une première tige flexible (3, 3a, 3b) qui est parmi lesdites au moins deux tiges flexibles (3, 3a, 3b ; 4, 4a, 4b) et dont la partie interne 5 est noyée à l'intérieur de la première plaque 21 du socle 2, ceci par rapport à la partie externe 6 de ladite au moins une deuxième tige flexible (4, 4a, 4b) qui est parmi lesdites au moins deux tiges flexibles (3, 3a, 3b ; 4, 4a, 4b) et dont la partie interne 5 est noyée à l'intérieur de la deuxième plaque 22 du socle 2. Un tel moyen de répulsion (7, 7a, 7b), d'une part, est interposé entre la partie externe 6 de ladite au moins une première tige flexible (3, 3a, 3b) et la partie externe 6 de ladite au moins une deuxième tige flexible (4, 4a, 4b) et, d'autre part, prend appui contre cette partie externe 6 de ladite au moins une première tige flexible (3, 3a, 3b) ainsi que contre cette partie externe 6 de ladite au moins une deuxième tige flexible (4, 4a, 4b).

A ce propos, on observera que, dans ce deuxième mode de réalisation, ledit au moins un moyen de répulsion (7, 7a, 7b) comporte, là encore, une barre rigide 70 (notamment télescopique) qui présente une longueur qui est supérieure à la distance entre, d'une part, la partie interne 5 de ladite au moins une première tige flexible (3, 3a, 3b) qui est parmi lesdites au moins deux tiges flexibles (3, 3a, 3b ; 4, 4a, 4b) et qui est noyée à l'intérieur de la première plaque 21 du socle 2 et, d'autre part, la partie interne 5 de ladite au moins une deuxième tige flexible (4, 4a, 4b) qui est parmi lesdites au moins deux tiges flexibles (3, 3a, 3b ; 4, 4a, 4b) et qui est noyée à l'intérieur de la deuxième plaque 22 du socle 2. D'autre part, ledit au moins un moyen de répulsion (7, 7a, 7b) comporte des moyens de fixation 71 qui sont configurés pour fixer ladite barre rigide 70, d'une part, sur la partie externe 6 de ladite au moins une première tige flexible (3, 3a, 3b) qui est parmi lesdites au moins deux tiges flexibles (3, 3a, 3b ; 4, 4a ; 4b) et dont la partie interne 5 est noyée à l'intérieur de la première plaque 21 du socle 2 et, d'autre part, sur la partie externe 6 de ladite au moins une deuxième tige flexible (4, 4a, 4b) qui est parmi lesdites au moins deux tiges flexibles (3, 3a, 3b ; 4, 4a, 4b) et dont la partie interne 5 est noyée à l'intérieur de la deuxième plaque 22 du socle 2.

A ce propos, on observera que de tels moyens de fixation 71 peuvent comporter, d'une part, une platine de fixation 710 qui comporte au moins un trou traversant 711 qui est traversé par la partie externe 6, selon le cas, de ladite au moins une première tige flexible (3, 3a, 3b) ou de ladite au moins une deuxième tige flexible ( 4, 4a, 4b), d'autre part, une bride de fixation 712 qui est configurée pour fixer une telle partie externe 6 de ladite au moins une première tige flexible (3, 3a, 3b) ou de ladite au moins une deuxième tige flexible (4, 4a, 4b) sur la platine de fixation 710 et, d'autre part encore, un système de fixation 713 (notamment sous la forme d'un boulon ou analogue) qui est configuré pour fixer la barre rigide 70 sur la platine de fixation 710.

Selon un mode de réalisation particulier, la platine de fixation 710 peut comporter, d'une part, une première aile latérale qui reçoit la bride de fixation 712, d'autre part, une deuxième aile latérale qui reçoit le système de fixation 713 et, d'autre part encore, une aile centrale, qui est interposée entre la première aile latérale et la deuxième aile latérale, à partir de laquelle ladite première aile latérale et ladite deuxième aile latérale s'étendent, et qui comporte ledit au moins un trou traversant 711. Une telle platine de fixation 710 peut adopter une forme en « Z ».

Une variante particulière de réalisation de ce deuxième mode de réalisation de ce premier type de réalisation consiste en ce que le dispositif d'ombrage 1 comporte un premier ensemble de tiges flexibles (3, 3a, 3b) qui comportent, chacune, d'une part, une partie interne 5 qui est noyée à l'intérieur de la première plaque 21 du socle 2 parmi les deux plaques (21 ; 22) du socle 2 (plus particulièrement à l'intérieur du matériau durci de la première plaque 21 du socle 2) et, d'autre part, une partie externe 6 qui s'étend dans le prolongement de la partie interne 5 d'une telle tige flexible (3, 3a, 3b), à l'extérieur dudit socle 2 ainsi qu'au-dessus de ce socle 2 (plus particulièrement à l'extérieur de cette première plaque 21 dudit socle 2 et au-dessus de cette première plaque 21 dudit socle 2).

Ce dispositif d'ombrage 1 comporte, également, un deuxième ensemble de tiges flexibles (4, 4a, 4b) qui comportent, chacune, d'une part, une partie interne 5, qui est noyée à l'intérieur de la deuxième plaque 22 du socle 2 parmi les deux plaques (21 ; 22) du socle 2 (plus particulièrement à l'intérieur du matériau durci de la deuxième plaque 22 du socle 2) et, d'autre part, une partie externe 6 qui s'étend dans le prolongement de la partie interne 5 d'une telle tige flexible (4, 4a, 4b), à l'extérieur dudit socle 2 ainsi qu'au-dessus de ce socle 2 (plus particulièrement à l'extérieur de cette deuxième plaque 22 dudit socle 2 et au-dessus de cette deuxième plaque 22 dudit socle 2).

Selon cette variante, le dispositif d'ombrage 1 peut comporter une pluralité de moyens de répulsion (7, 7a, 7b) qui sont configurés, chacun, pour repousser la partie externe 6 d'au moins une tige flexible (3, 3a, 3b) du premier ensemble de tiges flexibles (3, 3a, 3b) parmi lesdites au moins deux tiges flexibles (3, 3a, 3b ; 4, 4a, 4b), ceci par rapport à la partie externe 6 d'au moins une autre tige flexible (4, 4a, 4b) du deuxième ensemble de tiges flexibles (4, 4a, 4b) parmi lesdites au moins deux tiges flexibles (3, 3a, 3b ; 4, 4a, 4b). Là encore, un tel moyen de répulsion (7, 7a, 7b), d'une part, est interposé entre la partie externe 6 de ladite au moins une tige flexible (3, 3a, 3b) du premier ensemble de tiges flexibles (3, 3a, 3b) et la partie externe 6 de ladite au moins une autre tige flexible (4, 4a, 4b) du deuxième ensemble de tiges flexibles (4, 4a, 4b) et, d'autre part, prend appui contre cette partie externe 6 de ladite au moins une tige flexible (3, 3a, 3b) du premier ensemble de tiges flexibles (3, 3a, 3b) ainsi que contre cette partie externe 6 de ladite au moins une autre tige flexible (4, 4a, 4b) du deuxième ensemble de tiges flexibles (4, 4a, 4b).

A ce propos, on observera qu'un tel moyen de répulsion (7, 7a, 7b) peut, alors, comporter une barre rigide 70 (notamment télescopique) qui présente une longueur qui est supérieure à la distance entre, d'une part, la partie interne 5 de ladite au moins une première tige flexible (3, 3a, 3b) du premier ensemble de tiges flexibles (3, 3a, 3b) parmi lesdites au moins deux tiges flexibles (3, 3a, 3b ; 4, 4a, 4b) et, d'autre part, la partie interne 5 de ladite au moins une deuxième tige flexible (4, 4a, 4b) du deuxième ensemble de tiges flexibles (4, 4a, 4b) parmi lesdites au moins deux tiges flexibles (3, 3a, 3b ; 4, 4a, 4b). D'autre part, ledit au moins un moyen de répulsion (7, 7a, 7b) comporte des moyens de fixation 71 qui sont configurés pour fixer ladite barre rigide 70 sur la partie externe 6 de ladite au moins une première tige flexible (3, 3a, 3b) du premier ensemble de tiges flexibles (3, 3a, 3b) ainsi que sur la partie externe 6 de ladite au moins une deuxième tige flexible (4, 4a, 4b) du deuxième ensemble de tiges flexibles (4, 4a, 4b). On observera que ces moyens de fixation 71 peuvent présenter les caractéristiques décrites ci-dessus (platine de fixation 710, orifice traversant 711, bride de fixation 712, système de fixation 713).

Tel que mentionné ci-dessus, dans ce premier type de réalisation, le moyen de répulsion (7, 7a, 7b) peut comporter une barre rigide 70.

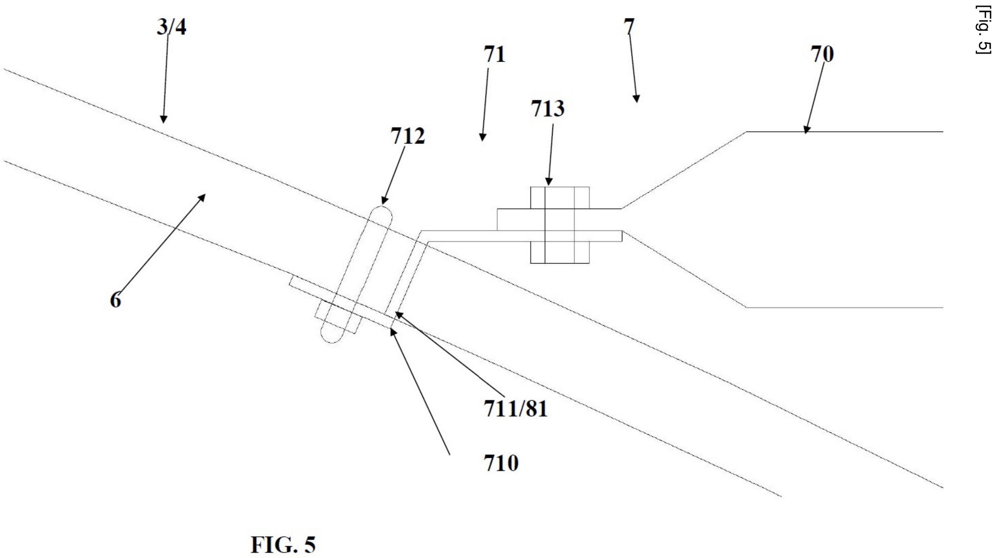

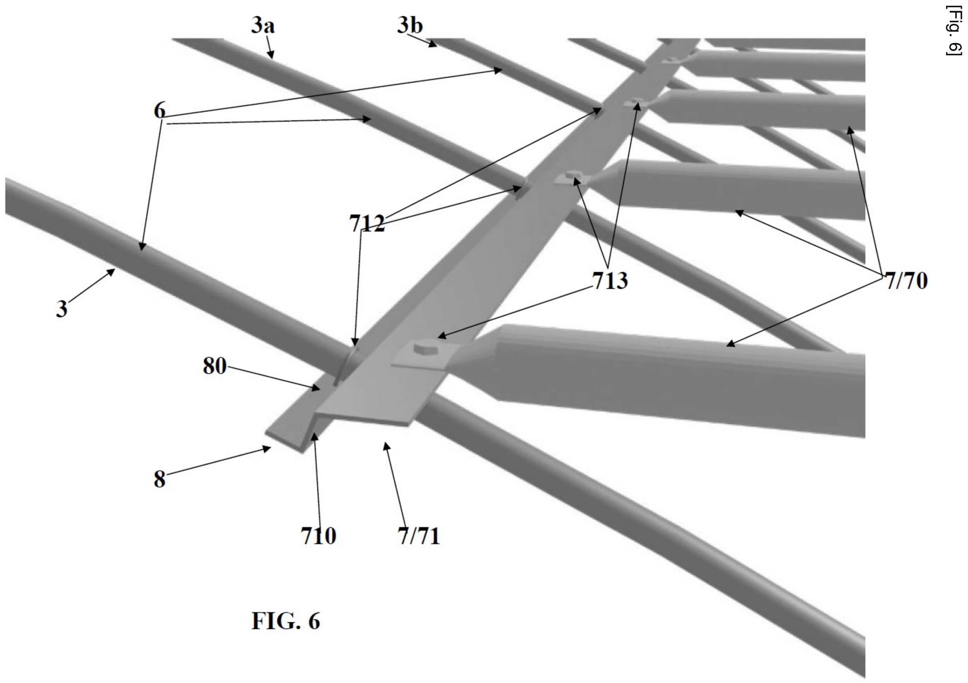

Selon une autre caractéristique, dans ce premier type de réalisation, une telle barre rigide 70 présente, d'une part, une première extrémité, qui prend appui contre la partie externe 6 de ladite au moins une première tige flexible (3, 3a, 3b), et qui repousse cette partie externe 6 de ladite au moins une première tige flexible (3, 3a, 3b) par rapport à la partie externe 6 de ladite au moins une deuxième tige flexible (4, 4a, 4b) et, d'autre part, une deuxième extrémité, qui est opposée à la première extrémité, qui prend appui contre la partie externe 6 de ladite au moins une deuxième tige flexible (4, 4a, 4b), et qui repousse cette partie externe 6 de ladite au moins une deuxième tige flexible (4, 4a, 4b) par rapport à la partie externe 6 de ladite au moins une première tige flexible (3, 3a, 3b), ceci tel que visible sur les figures 2 à 6.

Dans une alternative non illustrée, la barre rigide 70 peut présenter, d'une part, une première partie (notamment une partie centrale) qui présente une première extrémité, qui prend appui contre la partie externe 6 de ladite au moins une première tige flexible (3, 3a, 3b) et qui repousse cette partie externe 6 de ladite au moins une première tige flexible (3, 3a, 3b) par rapport à la partie externe 6 de ladite au moins une deuxième tige flexible (4, 4a, 4b), ainsi qu'une deuxième extrémité, qui est opposée à la première extrémité, qui prend appui contre la partie externe 6 de ladite au moins une deuxième tige flexible (4, 4a, 4b), et qui repousse cette partie externe 6 de ladite au moins une deuxième tige flexible (4, 4a, 4b) par rapport à la partie externe 6 de ladite au moins une première tige flexible (3, 3a, 3b) et, d'autre part, au moins une deuxième partie qui s'étend à partir de la première extrémité de la première partie, ceci dans le prolongement longitudinal de la première extrémité de cette première partie, voire encore une troisième partie qui s'étend à partir de la deuxième extrémité de la première partie, ceci dans le prolongement longitudinal de la deuxième extrémité de cette première partie. Une telle barre rigide 70 peut, alors, s'étendre au-delà de la partie externe 6 de ladite au moins une première tige flexible (3, 3a, 3b), latéralement par rapport à cette partie externe 6 de ladite au moins une première tige flexible (3, 3a, 3b) et vers l'extérieur du dispositif d'ombrage 1 [voire encore au-delà de la partie externe 6 de ladite au moins une deuxième tige flexible (4, 4a, 4b), latéralement par rapport à cette partie externe 6 de ladite au moins une deuxième tige flexible (4, 4a, 4b) et vers l'extérieur du dispositif d'ombrage 1], plus particulièrement pour servir de support à de la végétation.

Selon une autre caractéristique de ce premier type de réalisation (et selon le premier mode de réalisation, voire le deuxième mode de réalisation décrits ci-dessus), d'une part, la partie interne 5 d'au moins deux tiges flexibles (3, 3a, 3b) parmi lesdites au moins deux tiges flexibles (3, 3a, 3b ; 4, 4a , 4b) est noyée à l'intérieur de la première plaque 21 du socle 2 et, d'autre part, le dispositif d'ombrage 1 comporte des moyens de solidarisation 8 qui sont configurés pour solidariser la partie externe 6 desdites au moins deux tiges flexibles (3, 3a, 3b) qui sont parmi lesdites au moins deux tiges flexibles (3, 3a, 3b ; 4, 4a , 4b) et dont la partie interne 5 est noyée à l'intérieur de la première plaque 21 du socle 2.

De manière additionnelle (et selon le deuxième mode de réalisation de ce premier type de réalisation décrit ci-dessus), d'une part, la partie interne 5 d'au moins deux tiges flexibles (4, 4a , 4b) parmi lesdites au moins deux tiges flexibles (3, 3a, 3b ; 4, 4a , 4b) est noyée à l'intérieur de la deuxième plaque 22 du socle 2 et, d'autre part, le dispositif d'ombrage 1 comporte des moyens de solidarisation 8 qui sont configurés pour solidariser la partie externe 6 desdites au moins deux tiges flexibles (4, 4a , 4b) qui sont parmi lesdites au moins deux tiges flexibles (3, 3a, 3b ; 4, 4a , 4b) et dont la partie interne 5 est noyée à l'intérieur de la deuxième plaque 22 du socle 2.

A ce propos, on observera que les moyens de solidarisation 8 comportent un élément longiforme 80 (plus particulièrement sous la forme d'un profilé notamment métallique, plus spécifiquement une tôle pliée en forme de « U ») qui comporte au moins deux trous traversants 81 qui sont traversés, chacun, par la partie externe 6 de l'une desdites au moins deux tiges flexibles (3, 3a, 3b ; 4, 4a, 4b), plus particulièrement dont la partie interne 5 est noyée à l'intérieur de la première plaque 21 du socle 2, respectivement de la deuxième plaque 22 du socle 2. Une telle partie externe 6 peut être engagée en force au travers d'un tel trou traversant 81 et/ou être fixée (notamment par collage ou soudure) sur l'élément longiforme 80.

De manière alternative, les moyens de solidarisation 8 peuvent comporter, d'une part, un élément longiforme 80 (plus particulièrement métallique, synthétique ou composite, par exemple sous la forme d'un profilé rond et/ou creux) et, d'autre part, des moyens de fixation (plus particulièrement sous forme d'une soudure ou d'une colle) qui sont configurés pour assurer une fixation dudit élément longiforme 80 sur la partie externe 6 d'au moins deux tiges flexibles (3, 3a, 3b ; 4, 4a, 4b) dont la partie interne 5 est noyée à l'intérieur de la première plaque 21 du socle 2, respectivement de la deuxième plaque 22 du socle 2.

Tel que mentionné ci-dessus, les moyens de répulsion (7, 7a, 7b) comportent des moyens de fixation 71 qui comportent, d'une part, une platine de fixation 710 qui comporte au moins un trou traversant 711, d'autre part, une bride de fixation 712 et, d'autre part encore, un système de fixation 713.

A ce propos, on observera que, selon un mode de réalisation particulier, d'une part, ladite platine de fixation 710 est constituée par une partie de l'élément longiforme 80 que les moyens de fixation 8 comportent, d'autre part, ledit au moins un trou traversant 711, que la platine de fixation 710 comporte, est constitué par au moins un trou traversant 81 que l'élément longiforme 80 comporte.

Dans un pareil cas, ladite bride fixation 712 est configurée pour fixer la partie externe 6, selon le cas, de ladite au moins une tige flexible (3, 3a, 3b) ou de ladite au moins une première tige flexible (3, 3a, 3b) ou de ladite au moins une deuxième tige flexible (4, 4a, 4b) sur ledit élément longiforme 80. De manière alternative ou additionnelle, le système de fixation 713 est configuré pour fixer ladite au moins une barre rigide 70 sur ledit élément longiforme 80.

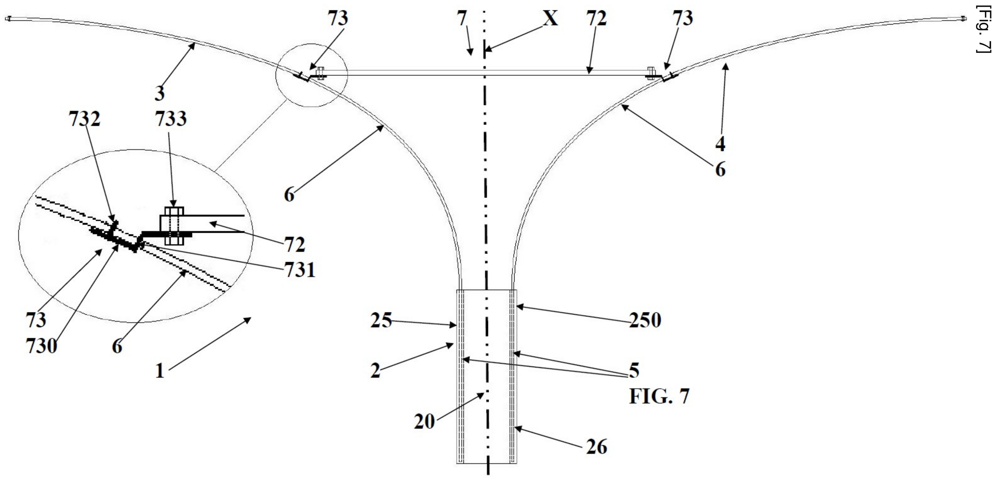

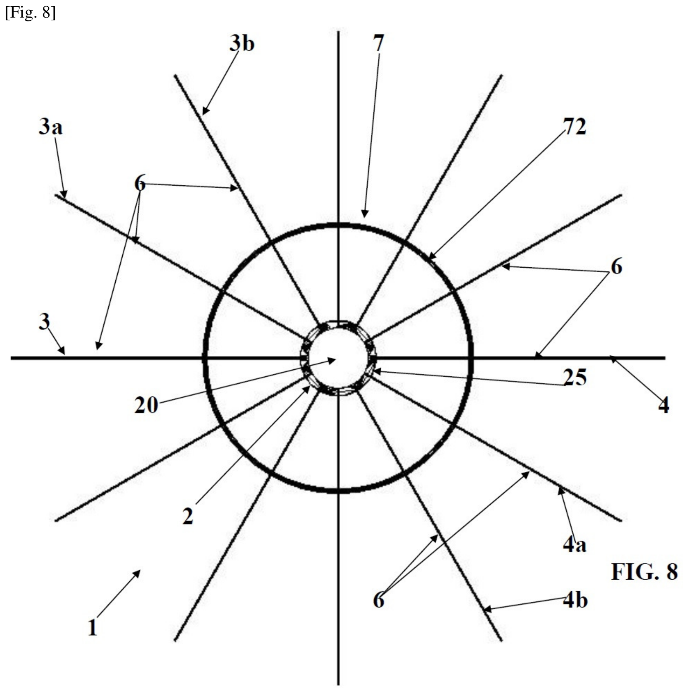

Lesdits moyens de solidarisation 8 peuvent, alors, comporter, d'une part, au moins une telle platine de fixation 710 (voire une pluralité de platines de fixation 710) et, d'autre part, au moins une telle bride de fixation 712 (voire une pluralité de brides de fixation 712).Selon un deuxième type de réalisation illustré figures 7 et 8, ledit socle 2, d'une part, s'étend selon un axe X sensiblement vertical, d'autre part, présente la forme d'un tube 25, qui s'étend selon ledit axe X, et qui présente une paroi tubulaire 250 et, d'autre part encore, présente une section transversale qui est circulaire ou polygonale (notamment carrée).

De manière additionnelle, ledit socle 2 comporte une armature tubulaire 26 qui comporte, d'une part, une pluralité de tiges flexibles (3, 3a, 3b ; 4, 4a ; 4b) qui comportent, chacune, une partie interne 5 (qui s'étend à l'intérieur de la paroi tubulaire 250 du tube 25) et une partie externe 6 (qui s'étend dans le prolongement de la partie interne 5 d'une telle tige flexible (3, 3a, 3b ; 4, 4a, 4b), ceci à l'extérieur dudit socle 2 ainsi qu'au-dessus de ce socle 2) et, d'autre part, une pluralité d'éléments de raccordement qui sont solidaires de la partie interne 5 desdites tiges flexibles (3, 3a, 3b ; 4, 4a, 4b) ;

Dans un dispositif d'ombrage 1 conforme à ce deuxième type de réalisation, d'une part, la partie interne 5 d'au moins une première tige flexible (3, 3a, 3b) parmi lesdites au moins deux tiges flexibles (3, 3a, 3b ; 4, 4a, 4b) est noyée à l'intérieur de la paroi tubulaire 250, d'autre part, la partie interne 5 d'au moins une deuxième tige flexible (4, 4a, 4b) parmi lesdites au moins deux tiges flexibles (3, 3a, 3b ; 4, 4a, 4b) est également noyée à l'intérieur de la paroi tubulaire 250 et, d'autre part encore, ledit au moins un moyen de répulsion (7, 7a, 7b) est configuré pour repousser la partie externe 6 de ladite au moins une première tige flexible (3, 3a, 3b) (qui est parmi lesdites au moins deux tiges flexibles 3, 3a, 3b ; 4, 4a, 4b et dont la partie interne 5 est noyée à l'intérieur de la paroi tubulaire 250) par rapport à la partie externe 6 de ladite au moins une deuxième tige flexible (4, 4a, 4b) (qui est parmi lesdites au moins deux tiges flexibles 3, 3a, 3b ; 4, 4a, 4b et dont la partie interne 5 est également noyée à l'intérieur de la paroi tubulaire 250). Un tel moyen de répulsion (7, 7a, 7b), d'une part, peut être interposé entre la partie externe 6 de ladite au moins une première tige flexible (3, 3a, 3b) et la partie externe 6 de ladite au moins une deuxième tige flexible (4, 4a, 4b) et, d'autre part, peut prend appui contre cette partie externe 6 de ladite au moins une première tige flexible (3, 3a, 3b) ainsi que contre cette partie externe 6 de ladite au moins une deuxième tige flexible (4, 4a, 4b).

Selon un premier mode de réalisation, ledit au moins un moyen de répulsion (7, 7a, 7b) comporte, d'une part, une couronne annulaire 72 qui présente un diamètre (plus particulièrement un diamètre interne) qui est supérieur à la distance entre la partie interne 5 de deux tiges flexibles (3, 3a, 3b ; 4, 4a, 4b) parmi lesdites au moins deux tiges flexibles (3, 3a, 3b ; 4, 4a, 4b) et, d'autre part, des moyens de fixation 73 qui sont configurés pour fixer la couronne annulaire 72 sur la partie externe 6 des deux tiges flexibles (3, 3a, 3b ; 4, 4a, 4b) parmi lesdites au moins deux tiges flexibles (3, 3a, 3b ; 4, 4a, 4b).

De tels moyens de fixation 73 peuvent comporter, d'une part, une platine de fixation 730 qui comporte au moins un trou traversant 731 qui est traversé par la partie externe 6 d'une tige flexible (3, 3a, 3b ; 4, 4a, 4b) parmi lesdites au moins deux tiges flexibles (3, 3a, 3b ; 4, 4a, 4b), d'autre part, une bride de fixation 732 qui est configurée pour fixer une telle partie externe 6 d'une telle tige flexible (3, 3a, 3b ; 4, 4a , 4b) sur la platine de fixation 730 et, d'autre part encore, un système de fixation 733 (notamment sous le forme d'un boulon ou analogue) qui est configuré pour fixer la couronne annulaire 72, ceci sur la platine de fixation 730.

Selon un mode de réalisation particulier, d'une part, le dispositif d'ombrage 1 comporte au moins trois tiges flexibles (3, 3a, 3b ; 4, 4a, 4b) qui comportent, chacune, une partie interne 5 qui est noyée à l'intérieur de la paroi tubulaire 250 tandis que les parties internes 5 de ces au moins trois tiges flexibles (3, 3a, 3b ; 4, 4a, 4b) sont agencées selon un cercle ou selon un polygone et, d'autre part, ledit au moins un moyen de répulsion (7, 7a, 7b) comporte une couronne annulaire 72, qui présente un diamètre (plus particulièrement un diamètre interne) qui est supérieur, selon le cas, au diamètre du cercle selon lequel les parties internes 5 desdites au moins trois tiges flexibles (3, 3a, 3b ; 4, 4a, 4b) sont agencées ou au diamètre d'un cercle inscrit à l'intérieur du polygone selon lequel les parties internes 5 desdites au moins trois tiges flexibles (3, 3a, 3b ; 4, 4a, 4b) sont agencées. Ledit au moins un moyen de répulsion (7, 7A, 7b) comporte, encore, des moyens de fixation 73 qui sont configurés pour fixer la couronne annulaire 72 sur la partie externe 6 desdites au moins trois tiges flexibles (3, 3a, 3b ; 4, 4a, 4b)

On observera que ces moyens de fixation 73 peuvent présenter les caractéristiques décrites ci-dessus (platine de fixation 730, orifice traversant 731, bride de fixation 732, système de fixation 733).Selon un deuxième mode de réalisation non représenté, ledit au moins moyen de répulsion (7, 7a, 7b) peut comporter, d'une part, une barre rigide 70 (notamment télescopique) qui présente une longueur qui est supérieure à la distance entre la partie interne 5 de ladite au moins une première tige flexible (3, 3a, 3b) parmi lesdites au moins deux tiges flexibles (3, 3a, 3b ; 4, 4a, 4b) et la partie interne 5 de ladite au moins une deuxième tige flexible (4, 4a, 4b) parmi lesdites au moins deux tiges flexibles (3, 3a, 3b ; 4, 4a, 4b) et, d'autre part, des moyens de fixation 71 qui sont configurés pour fixer ladite barre rigide 70 sur la partie externe 6 de ladite au moins une première tige flexible (3, 3a, 3b) ainsi que sur la partie externe 6 de ladite au moins une deuxième tige flexible (4, 4a, 4b).

De tels moyens de fixation 71 peuvent présenter les caractéristiques décrites ci-dessus. En particulier, de tels moyens de fixation 71 peuvent comporter, d'une part, une platine de fixation 710 qui comporte au moins un trou traversant 711 qui est traversé par la partie externe 6 de ladite au moins une tige flexible (3, 3a, 3b ; 4, 4a, 4b), d'autre part, une bride de fixation 712 qui est configurée pour fixer une telle partie externe 6 de ladite au moins une tige flexible (3, 3a, 3b; 4, 4a, 4b) sur la platine de fixation 710 et, d'autre part encore, un système de fixation 713 (notamment sous la forme d'un boulon ou analogue) qui est configuré pour fixer la barre rigide 70 sur la platine de fixation 710.

De manière similaire ou identique à ce qui a été décrit ci-dessus, la platine de fixation (710 ; 730) peut alors comporter, d'une part, une première aile latérale qui reçoit la bride de fixation (712 ; 732), d'autre part, une deuxième aile latérale qui reçoit le système de fixation (713 ; 733) et, d'autre part encore, une aile centrale, qui est interposée entre la première aile latérale et la deuxième aile latérale, à partir de laquelle ladite première aile latérale et ladite deuxième aile latérale s'étendent, et qui comporte ledit au moins un trou traversant (711 ; 731). Une telle platine de fixation (710 ; 730) peut adopter une forme en « Z ».

Tel que mentionné ci-dessus, le moyen de répulsion (7, 7a, 7b) peut comporter une barre rigide 70.

Selon une autre caractéristique non représentée, une telle barre rigide 70 peut, là encore, présenter, d'une part, une première extrémité, qui prend appui contre la partie externe 6 de ladite au moins une première tige flexible (3, 3a, 3b), et qui repousse cette partie externe 6 de ladite au moins une première tige flexible (3, 3a, 3b) par rapport à la partie externe 6 de ladite au moins une deuxième tige flexible (4, 4a, 4b) et, d'autre part, une deuxième extrémité, qui est opposée à la première extrémité, qui prend appui contre la partie externe 6 de ladite au moins une deuxième tige flexible (4, 4a, 4b), et qui repousse cette partie externe 6 de ladite au moins une deuxième tige flexible (4, 4a, 4b) par rapport à la partie externe 6 de ladite au moins une première tige flexible (3, 3a, 3b).

Dans une alternative non illustrée, la barre rigide 70 peut présenter, d'une part, une première partie (notamment une partie centrale) qui présente une première extrémité, qui prend appui contre la partie externe 6 de ladite au moins une première tige flexible (3, 3a, 3b) et qui repousse cette partie externe 6 de ladite au moins une première tige flexible (3, 3a, 3b) par rapport à la partie externe 6 de ladite au moins une deuxième tige flexible (4, 4a, 4b), ainsi qu'une deuxième extrémité, qui est opposée à la première extrémité, qui prend appui contre la partie externe 6 de ladite au moins une deuxième tige flexible (4, 4a, 4b), et qui repousse cette partie externe 6 de ladite au moins une deuxième tige flexible (4, 4a, 4b) par rapport à la partie externe 6 de ladite au moins une première tige flexible (3, 3a, 3b) et, d'autre part, au moins une deuxième partie qui s'étend à partir de la première extrémité de la première partie, ceci dans le prolongement longitudinal de la première extrémité de cette première partie, voire encore une troisième partie qui s'étend à partir de la deuxième extrémité de la première partie, ceci dans le prolongement longitudinal de la deuxième extrémité de cette première partie. Une telle barre rigide 70 peut, là encore, s'étendre au-delà de la partie externe 6 de ladite au moins une première tige flexible (3, 3a, 3b), latéralement par rapport à cette partie externe 6 de ladite au moins une première tige flexible (3, 3a, 3b) et vers l'extérieur du dispositif d'ombrage 1 [voire encore au-delà de la partie externe 6 de ladite au moins une deuxième tige flexible (4, 4a, 4b), latéralement par rapport à cette partie externe 6 de ladite au moins une deuxième tige flexible (4, 4a, 4b) et vers l'extérieur du dispositif d'ombrage 1], plus particulièrement pour servir de support à de la végétation.

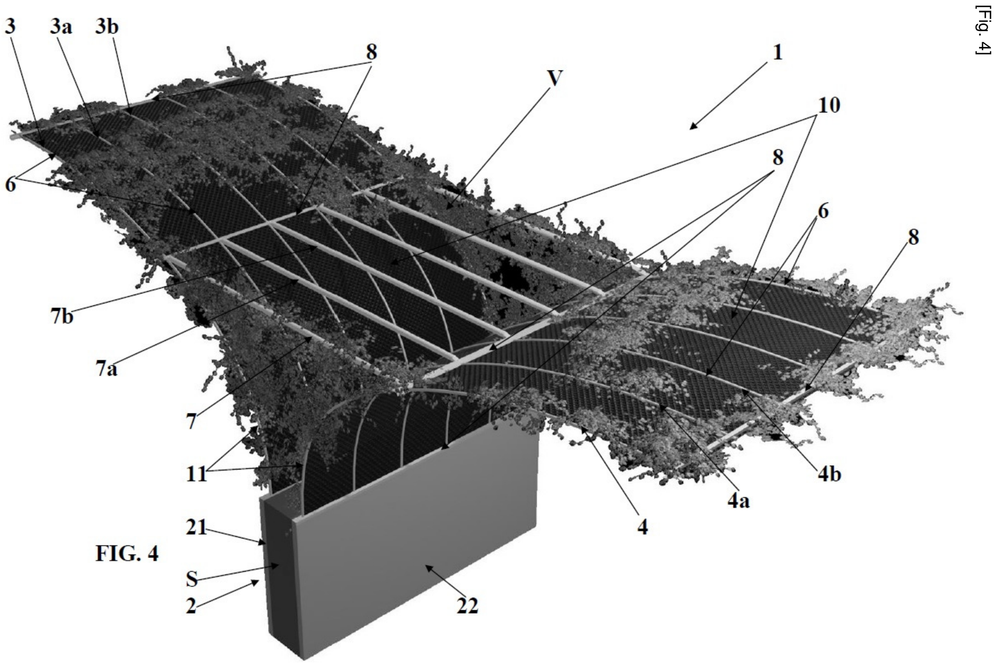

Une caractéristique additionnelle concerne le fait que le dispositif d'ombrage 1 peut encore comporter des moyens support 10 d'une végétation V. Ces moyens support 10 d'une végétation V, d'une part, sont configurés pour constituer un support sur lequel une telle végétation V repose, voire duquel une telle végétation V est solidaire (plus particulièrement lors de la croissance de cette végétation V), d'autre part, sont positionnés par-dessus ou par-dessous (comme visible figure 4) la partie externe 6 desdites au moins deux tiges flexibles (3, 3a, 3b ; 4, 4a, 4b) et sont rendus solidaires de cette partie externe 6 desdites au moins deux tiges flexibles (3, 3a, 3b ; 4, 4a, 4b) et/ou des moyens de solidarisation 8 tels que décrits ci-dessus. De tels moyens support 10 d'une végétation V peuvent adopter la forme d'au moins un fil, d'un filet, d'un treillis, d'une bâche ou analogue.

Selon une autre caractéristique, le dispositif d'ombrage 1 peut, encore, comporter des moyens de palissage 11 d'une végétation V qui sont configurés pour assurer le palissage de cette végétation V.

Selon un premier mode de réalisation illustré figure 4, de tels moyens de palissage 11 d'une végétation V comportent, d'une part, la partie externe 6 d'au moins une tige flexible (3, 3a, 3b ; 4, 4a, 4b) parmi lesdites au moins deux tiges flexibles (3, 3a, 3b ; 4, 4a, 4b) et, d'autre part, des moyens de solidarisation qui sont configurés pour solidariser la végétation V et cette partie externe 6 de ladite au moins une tige flexible (3, 3a, 3b ; 4, 4a, 4b) parmi lesdites au moins deux tiges flexibles (3, 3a, 3b ; 4, 4a, 4b)

De manière alternative ou (et de préférence) additionnelle, de tels moyens de palissage 11 d'une végétation V comportent, d'une part, au moins un organe de palissage (plus particulièrement sous la forme d'un fil de palissage, d'un filet, d'un treillis ou analogue) qui présente une première extrémité qui est fixée au sol 12 ainsi d'une deuxième extrémité, qui est opposée à la première extrémité, et qui est solidaire de la partie externe 6 d'au moins une tige flexible (3, 3a, 3b ; 4, 4a, 4b) parmi lesdites au moins deux tiges flexibles (3, 3a, 3b ; 4, 4a, 4b) et/ou qui est solidaire des moyens de solidarisation 8 et, d'autre part encore, des moyens de solidarisation qui sont configurés pour solidariser la végétation V et ledit au moins un organe de palissage.

Selon un mode de réalisation particulier, les moyens de palissage 11 d'une végétation V comportent, d'une part, au moins deux organes de palissage qui adoptent, chacun, la forme d'un fil de palissage qui présente une première extrémité qui est fixée au sol 12 ainsi d'une deuxième extrémité, qui est opposée à la première extrémité, et qui est solidaire de la partie externe 6 de l'une des tiges flexibles (3, 3a, 3b ; 4, 4a, 4b) parmi lesdites au moins deux tiges flexibles (3, 3a, 3b ; 4, 4a, 4b) et/ou des moyens de solidarisation 8 et, d'autre part, un organe de palissage additionnel, qui adopte la forme d'un filet ou d'un treillis, qui s'étend entre le sol 12 et la partie externe 6 desdites au moins deux tiges flexibles (3, 3a, 3b ; 4, 4a, 4b) et/ou les moyens de solidarisation 8 et, d'autre part encore, des moyens de fixation dudit organe de palissage additionnel (qui adoptent la forme d'un filet ou d'un treillis) sur lesdits au moins deux organes de palissage (qui adoptent, chacun, la forme d'un fil de palissage).

La présente invention concerne, également, au moins un procédé de fabrication d'un dispositif d'ombrage 1 qui présente au moins une partie des caractéristiques décrites ci-dessus. On observera que ce procédé de fabrication est au moins en partie mis en œuvre en usine.

Un premier procédé de fabrication comporte, alors :
- une étape de fabrication d'une armature 24 qui (tel que mentionné ci-dessus) comporte, d'une part, une première partie d'armature 240 qui comporte un premier ensemble d'une pluralité de tiges flexibles (3, 3a, 3b) qui comportent, chacune, une partie interne 5 (en référence à la partie d'une telle tige flexible 3, 3a, 3b qui sera noyée à l'intérieur d'une première plaque 21 telle que mentionnée ci-dessus et ci-dessous) et une partie externe 6 (en référence à la partie d'une telle tige flexible 3, 3a, 3b qui s'étendra à l'extérieur d'une telle première plaque 21) ainsi qu'une pluralité de barres 241 (plus particulièrement agencées sous la forme d'un treillis), d'autre part, une deuxième partie d'armature 242 qui comporte un deuxième ensemble d'une pluralité de tiges flexibles (4, 4a, 4b) qui comportent, chacune, au moins une partie interne 5 (en référence à la partie d'une telle tige flexible 4, 4a, 4b qui sera noyée à l'intérieur d'une deuxième plaque 22 telle que mentionnée ci-dessus et ci-dessous), voire encore une partie externe 6 (en référence à la partie d'une telle tige flexible 4, 4a, 4b qui s'étendra à l'extérieur d'une telle deuxième plaque 22), ainsi qu'une pluralité de barres 243 (plus particulièrement agencées sous la forme d'un treillis) et, d'autre part encore, des moyens de raccordement 23 (plus particulièrement sous la forme de tiges, de barres ou d'épingles) qui sont configurés pour raccorder la première partie d'armature 240 (plus particulièrement au moins une barre de la pluralité de barres 241 de cette première partie d'armature 240) et la deuxième partie d'armature 242 (plus particulièrement au moins une barre de la pluralité de barres 243 de cette deuxième partie d'armature 242) ;
- une première étape de positionnement qui consiste à positionner la première partie d'armature 240, respectivement la deuxième partie d'armature 242, à l'intérieur d'un moule ;
- une première étape de coulage qui consiste à couler un matériau durcissable à l'intérieur du moule, ceci en sorte de noyer la partie interne 5 des tiges flexibles (3, 3a, 3b ; 4, 4a, 4b) ainsi que la pluralité de barres (241 ; 243) de la première partie d'armature 240, respectivement de la deuxième partie d'armature 242, à l'intérieur de ce matériau durcissable ;
- une première étape de durcissement qui consiste à faire durcir ou à laisser durcir le matériau durcissable pour l'obtention d'une première plaque 21, respectivement d'une deuxième plaque 22 ;
- une étape de retournement qui consiste à retourner l'armature 24 ainsi que la première plaque 21, respectivement la deuxième plaque 22 ;
- une deuxième étape de positionnement qui consiste à positionner la deuxième partie d'armature 242, respectivement la première partie d'armature 240 à l'intérieur d'un moule ;
- une deuxième étape de coulage qui consiste à couler un matériau durcissable à l'intérieur du moule, ceci en sorte de noyer la partie interne 5 des tiges flexibles (4, 4a, 4b ; 3, 3a, 3b) ainsi que la pluralité de barres (243 ; 241) de la deuxième partie d'armature 242, respectivement de la première partie d'armature 240, à l'intérieur de ce matériau durcissable ;
- une deuxième étape de durcissement qui consiste à faire durcir ou à laisser durcir le matériau durcissable pour l'obtention d'une deuxième plaque 22, respectivement d'une première plaque 21, la première plaque 21 et la deuxième plaque 22 définissant un socle 2.

On observera que, dans l'étape de fabrication de l'armature 24, la pluralité de barres 241 (plus particulièrement agencées sous la forme d'un treillis) de la première partie d'armature 240 peuvent être raccordées aux tiges flexibles (3, 3a, 3b) du premier ensemble de tiges flexibles (3, 3a, 3b), ceci avant la première étape de positionnement de la première partie d'armature 240 à l'intérieur du moule.

De manière additionnelle et selon une première alternative, dans l'étape de fabrication de l'armature 24, la pluralité de barres 243 (plus particulièrement agencées sous la forme d'un treillis) de la deuxième partie d'armature 242 peuvent être raccordées aux tiges flexibles (4, 4a, 4b) du deuxième ensemble de tiges flexibles (4, 4a, 4b), là encore avant la première étape de positionnement de la première partie d'armature 240 à l'intérieur du moule.

Cependant et selon une deuxième alternative, dans cette étape de fabrication de l'armature 24, la pluralité de barres 243 (plus particulièrement agencées sous la forme d'un treillis) de cette deuxième partie d'armature 242 ne sont pas raccordées aux tiges flexibles (4, 4a, 4b) du deuxième ensemble de tiges flexibles (4, 4a, 4b) ni avant la première étape de positionnement de la première partie d'armature 240 à l'intérieur du moule, ni avant la deuxième étape de positionnement de la deuxième de la deuxième partie d'armature 242 à l'intérieur du moule.

Cette deuxième alternative permet de mettre en œuvre de manière particulière la deuxième étape de positionnement qui comporte, alors, d'une part, une première sous-étape de positionnement qui consiste à positionner au moins la partie interne 5 des tiges flexibles (4, 4a, 4b) du deuxième ensemble de tiges flexibles (4, 4a, 4b) de la deuxième partie d'armature 242 à l'intérieur du moule, ceci avant la deuxième étape de coulage et, d'autre part, une deuxième sous-étape de positionnement qui consiste à positionner la pluralité de barres 243 (plus particulièrement agencées sous la forme d'un treillis) de la deuxième partie d'armature 242 ainsi qu'une partie des moyens de raccordement 23 à l'intérieur du moule, ceci après la deuxième étape de coulage.

Cette alternative permet, avantageusement, de faciliter la deuxième étape de coulage qui peut, alors, être réalisée, d'une part, avant de positionner, à l'intérieur du moule, la pluralité de barres 243 de la deuxième partie d'armature 242 ainsi que les moyens de raccordement 23 qui sont associés à la première plaque 21 et, d'autre part, sans que la présence de cette première plaque 21 n'entrave le coulage du matériau durcissable à l'intérieur du moule lors de la deuxième étape de coulage.Ce premier procédé de fabrication permet l'obtention d'un dispositif d'ombrage 1 conforme au premier type de réalisation décrit ci-dessus (notamment le premier et le deuxième mode de réalisation de ce premier type de réalisation).

De manière additionnelle, dans ce premier procédé de fabrication, l'étape de fabrication de l'armature 24 comporte une étape de solidarisation qui consiste à solidariser la partie externe 6 d'au moins deux tiges flexibles (3, 3a, 3b) qu'au moins la première partie d'armature 240 comporte. Une telle solidarisation est assurée par l'intermédiaire des moyens de solidarisation 8 mentionnés ci-dessus

Selon une autre caractéristique et tel que mentionné ci-dessus, la deuxième partie d'armature 242 comporte la pluralité de tiges flexibles (4, 4a, 4b) qui comportent, chacune, la partie interne 5 ainsi qu'une partie externe 6.

Dans un pareil cas, dans le premier procédé de fabrication, l'étape de fabrication de l'armature 24 comporte, encore, une étape de solidarisation qui consiste à solidariser la partie externe 6 d'au moins deux tiges flexibles (4, 4a, 4b) que la deuxième partie d'armature 242 comporte. Là encore, une telle solidarisation est assurée par l'intermédiaire des moyens de solidarisation 8 mentionnés ci-dessus

De manière alternative ou (et de préférence) additionnelle, dans un pareil cas, l'étape de fabrication de l'armature 24 comporte une étape d'association temporaire qui consiste à associer, de manière temporaire, la partie externe 6 d'au moins une tige flexible (3, 3a, 3b) que la première partie d'armature 240 comporte et la partie externe 6 d'au moins une tige flexible (4, 4a, 4b) que la deuxième partie d'armature 242 comporte. Une telle association peut être assurée au moins durant la fabrication du dispositif d'ombrage 1 (conformément au procédé de fabrication décrit ci-dessus), durant son stockage, durant son transport, et au moins au début de son implantation sur site. Cette étape d'association temporaire peut être assurée par l'intermédiaire de moyens d'association temporaires 9 qui peuvent adopter la forme d'une pince d'association ou analogue. Une telle pince d'association comporte, d'une part, deux mors qui comportent, chacun et en vis-à-vis, au moins deux logements pour la réception d'une partie externe 6 d'une tige flexible (3, 3a, 3b ; 4, 4a, 4b) et, d'autre part, des moyens de fixation (notamment par serrage, plus particulièrement sous forme d'au moins un boulon ou analogue) de ces mors sur ces tiges flexibles (3, 3a, 3b ; 4, 4a, 4b).

Le premier procédé de fabrication peut, encore, consister, d'une part, à définir (plus particulièrement en usine) un volume interne 20 (tel que mentionné ci-dessus) entre la première plaque 21 et la deuxième plaque 22, d'autre part, à remplir au moins une partie du volume interne 20 avec un substrat de croissance végétale S (en usine ou chez un pépiniériste), d'autre part encore, à semer ou à planter (en usine ou chez un pépiniériste) une végétation V à l'intérieur du substrat de croissance végétal S et, d'autre part encore, à assurer la croissance de cette végétation V, ceci avant installation définitive sur un site (en usine ou chez un pépiniériste).

L'invention concerne, également, un deuxième procédé de fabrication d'un dispositif d'ombrage 1 qui comporte :
- une étape de fabrication d'une armature tubulaire 26 qui comporte, d'une part, une pluralité de tiges flexibles (3, 3a, 3b ; 4, 4a ; 4b) qui comportent, chacune, une partie interne 5 et une partie externe 6 et, d'autre part, une pluralité d'éléments de raccordement qui sont solidaires de la partie interne 5 desdites tiges flexibles (3, 3a, 3b ; 4, 4a, 4b) ;
- une étape de positionnement qui consiste à positionner au moins la partie interne 5 des tiges flexibles (3, 3a, 3b ; 4, 4a, 4b) et les éléments de raccordement de ladite d'armature tubulaire 26, ceci à l'intérieur d'un moule qui comporte deux parois tubulaires, coaxiales et espacées ;
- une étape de coulage qui consiste à couler un matériau durcissable à l'intérieur du moule, ceci en sorte de noyer la partie interne 5 des tiges flexibles (3, 3a, 3b ; 4, 4a, 4b) ainsi que les éléments de raccordement de l'armature tubulaire 26 à l'intérieur de ce matériau durcissable ;
- une étape de durcissement qui consiste à faire durcir ou à laisser durcir le matériau durcissable pour l'obtention d'une paroi tubulaire 250 d'un tube 25 définissant un socle 2.

Ce deuxième procédé de fabrication permet l'obtention d'un dispositif d'ombrage 1 conforme au deuxième type de réalisation décrit ci-dessus.

Dans ce deuxième procédé de fabrication, l'étape de fabrication de l'armature tubulaire 26 peut comporter une étape d'association temporaire qui consiste à associer, de manière temporaire, la partie externe 6 d'au moins une tige flexible (3, 3a, 3b) de l'armature tubulaire 26 et la partie externe 6 d'au moins une autre tige flexible (4, 4a, 4b) de l'armature tubulaire 26.

De manière additionnelle, ce deuxième procédé de fabrication peut encore consister, d'une part, à définir un volume interne 20 à l'intérieur du tube 25 du socle 2, d'autre part, à remplir au moins une partie du volume interne 20 avec un substrat de croissance végétale S, d'autre part encore, à semer ou à planter une végétation V à l'intérieur du substrat de croissance végétal S et, d'autre part encore, à assurer la croissance de cette végétation V, ceci avant installation définitive sur un site.

L'invention concerne, encore, au moins un procédé d'installation d'un dispositif d'ombrage 1 sur site.

Selon ce procédé d'installation, le dispositif d'ombrage 1 présente au moins une partie des caractéristiques décrites ci-dessus et/ou est obtenu par la mise en œuvre du premier ou du deuxième procédé de fabrication tel que décrit ci-dessus.

Un premier procédé d'installation comporte une étape d'implantation qui consiste à implanter le dispositif d'ombrage 1 (obtenu par la mise en œuvre du premier procédé de fabrication et/ou conforme au premier type de réalisation) sur site et, ensuite, une étape de répulsion qui consiste à repousser la partie externe 6 d'au moins une tige flexible (3, 3a, 3b), plus particulièrement que la première partie d'armature 240 comporte, dont la partie interne 5 est noyée dans la première plaque 21 en un matériau durci, ceci par rapport, selon le cas, à la deuxième plaque 22 ou par rapport à la partie externe 6 d'au moins une autre tige flexible (4, 4a, 4b), plus particulièrement que la deuxième partie d'armature 242 comporte, dont la partie interne 6 est noyée dans la deuxième plaque 22 en un matériau durci.

Une telle étape de répulsion peut être mise en œuvre par l'intermédiaire dudit au moins un moyen de répulsion (7, 7a, 7b) mentionné ci-dessus.

Tel que mentionné ci-dessus, le procédé de fabrication comporte une étape d'association temporaire de la partie externe 6 d'au moins une tige flexible (3, 3a, 3b) que la première partie d'armature 240 comporte et de la partie externe 6 d'au moins une tige flexible (4, 4a, 4b) que la deuxième partie d'armature 242 comporte.

A ce propos, on observera que le procédé d'installation comporte, alors, entre l'étape d'implantation et l'étape de répulsion, une étape de dissociation qui consiste à dissocier la partie externe 6 d'au moins une tige flexible (3, 3a, 3b) que la première partie d'armature 240 comporte et la partie externe 6 d'au moins une autre tige flexible (4, 4a, 4b) que la deuxième partie d'armature 242 comporte.

Cette étape de dissociation est assurée en retirant les moyens d'association temporaires 9, plus particulièrement ladite pince d'association mentionnée ci-dessus.

Un deuxième procédé d'installation comporte une étape d'implantation qui consiste à implanter le dispositif d'ombrage 1 (obtenu par la mise en œuvre du deuxième procédé de fabrication et/ou conforme au deuxième type de réalisation) sur site et, ensuite, une étape de répulsion qui consiste à repousser la partie externe 6 d'au moins une tige flexible (3, 3a, 3b), plus particulièrement de l'armature tubulaire 26, dont la partie interne 5 est noyée dans la paroi tubulaire 250 du tube 25 définissant le socle 2, ceci par rapport par rapport à la partie externe 6 d'au moins une autre tige flexible (4, 4a, 4b), plus particulièrement de l'armature tubulaire 26, dont la partie interne 5 est noyée dans la paroi tubulaire 250 du tube 25 définissant le socle 2.

Une telle étape de répulsion peut, là encore, être mise en œuvre par l'intermédiaire dudit au moins un moyen de répulsion (7, 7a, 7b) mentionné ci-dessus.

Tel que mentionné ci-dessus, le procédé de fabrication comporte une étape d'association temporaire qui consiste à associer, de manière temporaire, la partie externe 6 d'au moins une tige flexible (3, 3a, 3b) de l'armature tubulaire 26 et la partie externe 6 d'au moins une autre tige flexible (4, 4a, 4b) de l'armature tubulaire 26.

A ce propos, on observera que le procédé d'installation comporte, alors, entre l'étape d'implantation et l'étape de répulsion, une étape de dissociation qui consiste à dissocier la partie externe 6 d'au moins une tige flexible (3, 3a, 3b) que l'armature tubulaire 26 comporte et la partie externe 6 d'au moins une autre tige flexible (4, 4a, 4b) que ladite armature tubulaire 26 comporte.

Cette étape de dissociation est assurée en retirant les moyens d'association temporaires 9, plus particulièrement ladite pince d'association mentionnée ci-dessus.

## Revendications

1. Dispositif d'ombrage (1) comportant, d'une part, un socle (2), qui est en un matériau durci, et qui comporte un volume interne (20) destiné à contenir un substrat de croissance végétale (S) et, d'autre part, au moins deux tiges flexibles (3, 3a, 3b ; 4, 4a, 4b) qui comportent, chacune, une partie interne (5), qui s'étend à l'intérieur du socle (2), et qui est solidaire dudit socle (2) ainsi qu'une partie externe (6) qui s'étend dans le prolongement de la partie interne (5) d'une telle tige flexible (3, 3a, 3b ; 4, 4a, 4b), à l'extérieur dudit socle (2) ainsi qu'au-dessus de ce socle (2),
- **caractérisé par le fait que** la partie interne (5) desdites au moins deux tiges flexibles (3, 3a, 3b ; 4, 4a, 4b) est noyée à l'intérieur du matériau durci du socle (2) tandis que le dispositif d'ombrage (1) comporte, encore, d'une part, une armature (24) dont au moins une partie est noyée à l'intérieur du matériau durci du socle (2) et, d'autre part, au moins un moyen de répulsion (7, 7a, 7b) qui est configuré pour repousser la partie externe (6) d'au moins une tige flexible (3, 3a, 3b ; 4, 4a, 4b) parmi lesdites au moins deux tiges flexibles (3, 3a, 3b ; 4, 4a, 4b), ceci par rapport à la partie externe (6) d'au moins une autre tige flexible (4, 4a, 4b ; 3, 3a, 3b) parmi lesdites au moins deux tiges flexibles (3, 3a, 3b ; 4, 4a, 4b).

2. Dispositif d'ombrage (1) selon la revendication 1, **caractérisé par le fait que** le socle (2) comporte, d'une part, deux plaques parallèles (21 ; 22) en un matériau durci et, d'autre part, des moyens de raccordement (23) qui sont configurés pour raccorder ces deux plaques parallèles (21 ; 22) entre elles tandis que, d'une part, la partie interne (5) d'au moins une première tige flexible (3, 3a,3b) parmi lesdites au moins deux tiges flexibles (3, 3a, 3b ; 4, 4a, 4b) est noyée à l'intérieur d'une première plaque (21) parmi les deux plaques (21 ; 22) du socle (2), d'autre part, la partie interne (5) d'au moins une deuxième tige flexible (4, 4a, 4b) parmi lesdites au moins deux tiges flexibles (3, 3a, 3b ; 4, 4a, 4b) est noyée à l'intérieur d'une deuxième plaque (22) parmi les deux plaques (21 ; 22) du socle (2) et, d'autre part encore, ledit au moins un moyen de répulsion (7, 7a, 7b) est configuré pour repousser la partie externe (6) de ladite au moins une première tige flexible (3, 3a, 3b), ceci par rapport à la partie externe (6) de ladite au moins une deuxième tige flexible (4, 4a, 4b).

3. Dispositif d'ombrage (1) selon la revendication 2, **caractérisé par le fait que**, d'une part, la partie interne (5) d'au moins deux tiges flexibles (3, 3a, 3b ; 4, 4a , 4b) parmi lesdites au moins deux tiges flexibles (3, 3a, 3b ; 4, 4a , 4b) est noyée à l'intérieur de la première plaque (21) du socle (2), respectivement à l'intérieur de la deuxième plaque (22) du socle (2), et, d'autre part, le dispositif d'ombrage (1) comporte des moyens de solidarisation (8) qui sont configurés pour solidariser la partie externe (6) desdites au moins deux tiges flexibles (3, 3a, 3b ; 4, 4a , 4b) qui sont parmi lesdites au moins deux tiges flexibles (3, 3a, 3b ; 4, 4a , 4b) et dont la partie interne (5) est noyée à l'intérieur de la première plaque (21), respectivement de la deuxième plaque (22).

4. Dispositif d'ombrage (1) selon la revendication 1, **caractérisé par le fait que** le socle (2), d'une part, s'étend selon un axe (X) sensiblement vertical, d'autre part, présente la forme d'un tube (25), qui s'étend selon ledit axe (X), et qui présente une paroi tubulaire (250) et, d'autre part encore, présente une section transversale qui est circulaire ou polygonale tandis que, d'une part, la partie interne (5) d'au moins une première tige flexible (3, 3a, 3b) parmi lesdites au moins deux tiges flexibles (3, 3a, 3b ; 4, 4a, 4b) est noyée à l'intérieur de la paroi tubulaire (250), d'autre part, la partie interne (5) d'au moins une deuxième tige flexible (4, 4a, 4b) parmi lesdites au moins deux tiges flexibles (3, 3a, 3b ; 4, 4a, 4b) est noyée à l'intérieur de la paroi tubulaire (250) et, d'autre part encore, ledit au moins un moyen de répulsion (7, 7a, 7b) est configuré pour repousser la partie externe (6) de ladite au moins une première tige flexible (3, 3a, 3b) par rapport à la partie externe (6) de ladite au moins une deuxième tige flexible (4, 4a, 4b).

5. Dispositif d'ombrage (1) selon la revendication 4, **caractérisé par le fait que** ledit au moins un moyen de répulsion (7, 7a, 7b) comporte, d'une part, une couronne annulaire (72) qui présente un diamètre qui est supérieur à la distance entre la partie interne (5) de deux tiges flexibles (3, 3a, 3b ; 4, 4a, 4b) parmi lesdites au moins deux tiges flexibles (3, 3a, 3b ; 4, 4a, 4b) et, d'autre part, des moyens de fixation (73) qui sont configurés pour fixer la couronne annulaire (72) sur la partie externe (6) des deux tiges flexibles (3, 3a, 3b ; 4, 4a, 4b) parmi lesdites au moins deux tiges flexibles (3, 3a, 3b ; 4, 4a, 4b).

6. Dispositif d'ombrage (1) selon la revendication 4, **caractérisé par le fait que**, d'une part, il comporte au moins trois tiges flexibles (3, 3a, 3b ; 4, 4a, 4b) qui comportent, chacune, une partie interne (5) qui est noyée à l'intérieur de la paroi tubulaire (250) tandis que les parties internes (5) de ces au moins trois tiges flexibles (3, 3a, 3b ; 4, 4a, 4b) sont agencées selon un cercle ou selon un polygone et, d'autre part, ledit au moins un moyen de répulsion (7, 7a, 7b) comporte une couronne annulaire (72), qui présente un diamètre qui est supérieur, selon le cas, au diamètre du cercle selon lequel les parties internes (5) desdites au moins trois tiges flexibles (3, 3a, 3b ; 4, 4a, 4b) sont agencées ou au diamètre d'un cercle inscrit à l'intérieur du polygone selon lequel les parties internes (5) desdites au moins trois tiges flexibles (3, 3a, 3b ; 4, 4a, 4b) sont agencées, ainsi que des moyens de fixation (73) qui sont configurés pour fixer la couronne annulaire (72) sur la partie externe (6) desdites au moins trois tiges flexibles (3, 3a, 3b ; 4, 4a, 4b).

7. Dispositif d'ombrage (1) selon l'une quelconque des revendications 2 ou 4, **caractérisé par le fait que** ledit au moins moyen de répulsion (7, 7a, 7b) comporte, d'une part, une barre rigide (70) qui présente une longueur qui est supérieure à la distance entre la partie interne (5) de ladite au moins une première tige flexible (3, 3a, 3b) parmi lesdites au moins deux tiges flexibles (3, 3a, 3b ; 4, 4a, 4b) et la partie interne (5) de ladite au moins une deuxième tige flexible (4, 4a, 4b) parmi lesdites au moins deux tiges flexibles (3, 3a, 3b ; 4, 4a, 4b) et, d'autre part, des moyens de fixation (71) qui sont configurés pour fixer ladite barre rigide (70) sur la partie externe (6) de ladite au moins une première tige flexible (3, 3a, 3b) ainsi que sur la partie externe (6) de ladite au moins une deuxième tige flexible (4, 4a, 4b).

8. Dispositif d'ombrage (1) selon la revendication 7, **caractérisé par le fait que** la barre rigide (70) présente, d'une part, une première extrémité, qui prend appui contre la partie externe (6) de ladite au moins une première tige flexible (3, 3a, 3b), et qui repousse cette partie externe (6) de ladite au moins une première tige flexible (3, 3a, 3b) par rapport à la partie externe (6) de ladite au moins une deuxième tige flexible (4, 4a, 4b) et, d'autre part, une deuxième extrémité, qui est opposée à la première extrémité, qui prend appui contre la partie externe (6) de ladite au moins une deuxième tige flexible (4, 4a, 4b), et qui repousse cette partie externe (6) de ladite au moins une deuxième tige flexible (4, 4a, 4b) par rapport à la partie externe (6) de ladite au moins une première tige flexible (3, 3a, 3b).

9. Dispositif d'ombrage (1) selon la revendication 7, **caractérisé par le fait que** la barre rigide (70) présente, d'une part, une première partie qui présente une première extrémité, qui prend appui contre la partie externe (6) de ladite au moins une première tige flexible (3, 3a, 3b) et qui repousse cette partie externe (6) de ladite au moins une première tige flexible (3, 3a, 3b) par rapport à la partie externe (6) de ladite au moins une deuxième tige flexible (4, 4a, 4b), ainsi qu'une deuxième extrémité, qui est opposée à la première extrémité, qui prend appui contre la partie externe (6) de ladite au moins une deuxième tige flexible (4, 4a, 4b), et qui repousse cette partie externe (6) de ladite au moins une deuxième tige flexible (4, 4a, 4b) par rapport à la partie externe (6) de ladite au moins une première tige flexible (3, 3a, 3b) et, d'autre part, au moins une deuxième partie qui s'étend à partir de la première extrémité de la première partie, ceci dans le prolongement longitudinal de la première extrémité de cette première partie, voire une troisième partie qui s'étend à partir de la deuxième extrémité de la première partie, ceci dans le prolongement longitudinal de cette deuxième extrémité de cette première partie.

10. Dispositif d'ombrage (1) selon l'une quelconque des revendications précédentes, **caractérisé par le fait qu'**il comporte des moyens de palissage (11) d'une végétation (V), d'une part, qui sont configurés pour assurer le palissage de cette végétation (V) et, d'autre part, qui comportent la partie externe (6) d'au moins une tige flexible (3, 3a, 3b ; 4, 4a, 4b) parmi lesdites au moins deux tiges flexibles (3, 3a, 3b ; 4, 4a, 4b) ainsi que des moyens de solidarisation qui sont configurés pour solidariser la végétation (V) et cette partie externe (6) de ladite au moins une tige flexible (3, 3a, 3b ; 4, 4a, 4b) parmi lesdites au moins deux tiges flexibles (3, 3a, 3b ; 4, 4a, 4b).

11. Dispositif d'ombrage (1) selon la revendication 1 ou la revendication 3, **caractérisé par le fait qu'**il comporte des moyens de palissage (11) d'une végétation (V), d'une part, qui sont configurés pour assurer le palissage de cette végétation (V), d'autre part, qui comportent au moins un organe de palissage qui présente une première extrémité qui est fixée au sol (12) ainsi d'une deuxième extrémité, qui est opposée à la première extrémité, et qui est solidaire de la partie externe (6) d'au moins une tige flexible (3, 3a, 3b ; 4, 4a, 4b) parmi lesdites au moins deux tiges flexibles (3, 3a, 3b ; 4, 4a, 4b) ou qui est solidaire des moyens de solidarisation (8) et, d'autre part encore, qui comportent des moyens de solidarisation qui sont configurés pour solidariser la végétation (V) et ledit au moins un organe de palissage.

12. Procédé de fabrication d'un dispositif d'ombrage (1) conforme à l'une quelconque des revendications 2 ou 3, ce procédé de fabrication comporte :
- une étape de fabrication d'une armature (24) qui comporte, d'une part, une première partie d'armature (240) qui comporte un premier ensemble d'une pluralité de tiges flexibles (3, 3a, 3b) qui comportent, chacune, une partie interne (5) et une partie externe (6) ainsi qu'une pluralité de barres (241) , d'autre part, une deuxième partie d'armature (242) qui comporte un deuxième ensemble d'une pluralité de tiges flexibles (4, 4a, 4b) qui comportent, chacune, une partie interne (5) et une partie externe (6) ainsi qu'une pluralité de barres (243) et, d'autre part encore, des moyens de raccordement (23) qui sont configurés pour raccorder la première partie d'armature (240) et la deuxième partie d'armature (242) ;
- une première étape de positionnement qui consiste à positionner la première partie d'armature (240) à l'intérieur d'un moule ;
- une première étape de coulage qui consiste à couler un matériau durcissable à l'intérieur du moule, ceci en sorte de noyer la partie interne (5) des tiges flexibles (3, 3a, 3b ; 4, 4a, 4b) ainsi que la pluralité de barres (241) de la première partie d'armature (240) à l'intérieur de ce matériau durcissable ;
- une première étape de durcissement qui consiste à faire durcir ou à laisser durcir le matériau durcissable pour l'obtention d'une première plaque (21);
- une étape de retournement qui consiste à retourner l'armature (24) ainsi que la première plaque (21) ;
- une deuxième étape de positionnement qui consiste à positionner la deuxième partie d'armature (242) à l'intérieur d'un moule ;
- une deuxième étape de coulage qui consiste à couler un matériau durcissable à l'intérieur du moule, ceci en sorte de noyer la partie interne (5) des tiges flexibles (4, 4a, 4b ; 3, 3a, 3b) ainsi que la pluralité de barres (243) de la deuxième partie d'armature (242) à l'intérieur de ce matériau durcissable ;
- une deuxième étape de durcissement qui consiste à faire durcir ou à laisser durcir le matériau durcissable pour l'obtention d'une deuxième plaque (22), la première plaque (21) et la deuxième plaque (22) définissant un socle (2).

13. Procédé de fabrication d'un dispositif d'ombrage (1) selon la revendication 12, **caractérisé par le fait que** la deuxième étape de positionnement comporte, d'une part, une première sous-étape de positionnement qui consiste à positionner au moins la partie interne (5) des tiges flexibles (4, 4a, 4b) du deuxième ensemble de tiges flexibles (4, 4a, 4b) de la deuxième partie d'armature (242) à l'intérieur du moule, ceci avant la deuxième étape de coulage et, d'autre part, une deuxième sous-étape de positionnement qui consiste à positionner la pluralité de barres (243) de la deuxième partie d'armature (242) ainsi qu'une partie des moyens de raccordement (23) à l'intérieur du moule, ceci après la deuxième étape de coulage.

14. Procédé de fabrication d'un dispositif d'ombrage (1) selon l'une quelconque des revendications 12 ou 13, **caractérisé par le fait que** l'étape de fabrication de l'armature (24) comporte une étape de solidarisation qui consiste à solidariser la partie externe (6) d'au moins deux tiges flexibles (3, 3a, 3b ; 4, 4a, 4b) qu'au moins la première partie d'armature (240) comporte et que la deuxième partie d'armature (242) comporte.

15. Procédé de fabrication d'un dispositif d'ombrage (1) selon la revendication 12, **caractérisé par le fait que** l'étape de fabrication de l'armature (24) comporte une étape d'association temporaire qui consiste à associer, de manière temporaire, la partie externe (6) d'au moins une tige flexible (3, 3a, 3b) que la première partie d'armature (240) comporte et la partie externe (6) d'au moins une tige flexible (4, 4a, 4b) que la deuxième partie d'armature (242) comporte.

16. Procédé de fabrication d'un dispositif d'ombrage (1) conforme à l'une quelconque des revendications 4 à 6, ce procédé de fabrication comporte :
- une étape de fabrication d'une armature tubulaire (26) qui comporte, d'une part, une pluralité de tiges flexibles (3, 3a, 3b ; 4, 4a ; 4b) qui comportent, chacune, une partie interne (5) et une partie externe (6) et, d'autre part, une pluralité d'éléments de raccordement qui sont solidaires de la partie interne (5) desdites tiges flexibles (3, 3a, 3b ; 4, 4a, 4b) ;
- une étape de positionnement qui consiste à positionner au moins la partie interne (5) des tiges flexibles (3, 3a, 3b ; 4, 4a, 4b) et les éléments de raccordement de ladite d'armature tubulaire (26), ceci à l'intérieur d'un moule qui comporte deux parois tubulaires, coaxiales et espacées ;
- une étape de coulage qui consiste à couler un matériau durcissable à l'intérieur du moule, ceci en sorte de noyer la partie interne (5) des tiges flexibles (3, 3a, 3b ; 4, 4a, 4b) ainsi que les éléments de raccordement de l'armature tubulaire (26) à l'intérieur de ce matériau durcissable ;
- une étape de durcissement qui consiste à faire durcir ou à laisser durcir le matériau durcissable pour l'obtention d'une paroi tubulaire (250) d'un tube (25) définissant un socle (2).

17. Procédé de fabrication d'un dispositif d'ombrage (1) selon la revendication 16, **caractérisé par le fait que** l'étape de fabrication de l'armature tubulaire (26) comporte une étape d'association temporaire qui consiste à associer, de manière temporaire, la partie externe (6) d'au moins une tige flexible (3, 3a, 3b) de l'armature tubulaire (26) et la partie externe (6) d'au moins une autre tige flexible (4, 4a, 4b) de l'armature tubulaire (26).

18. Procédé d'installation d'un dispositif d'ombrage (1) sur site, **caractérisé par le fait que**, d'une part, le dispositif d'ombrage (1) est conforme à l'une quelconque des revendications 2 ou 3 et/ou est obtenu par la mise en œuvre du procédé de fabrication selon l'une quelconque des revendications 12 à 15 et, d'autre part, le procédé d'installation comporte une étape d'implantation qui consiste à implanter le dispositif d'ombrage (1) sur site et, ensuite, une étape de répulsion qui consiste à repousser la partie externe (6) d'au moins une tige flexible (3, 3a, 3b) dont la partie interne (5) est noyée dans la première plaque (21) en un matériau durci, ceci par rapport à la partie externe (6) d'au moins une autre tige flexible (4, 4a, 4b) dont la partie interne (5) est noyée dans la deuxième plaque (22) en un matériau durci.

19. Procédé d'installation d'un dispositif d'ombrage (1) sur site, **caractérisé par le fait que**, d'une part, le dispositif d'ombrage (1) est conforme à l'une quelconque des revendications 4 à 6 et/ou est obtenu par la mise en œuvre du procédé de fabrication selon l'une quelconque des revendications 16 ou 17 et, d'autre part, le procédé d'installation comporte une étape d'implantation qui consiste à implanter le dispositif d'ombrage (1) sur site et, ensuite, une étape de répulsion qui consiste à repousser la partie externe (6) d'au moins une tige flexible (3, 3a, 3b) dont la partie interne (5) est noyée dans la paroi tubulaire (250) du tube (25) définissant le socle (2), ceci par rapport à la partie externe (6) d'au moins une autre tige flexible (4, 4a, 4b) dont la partie interne (5) est noyée dans la paroi tubulaire (250) du tube (25) définissant le socle (2).

20. Procédé d'installation selon la revendication 18 ou la revendication 19, **caractérisé par le fait que**, entre l'étape d'implantation et l'étape de répulsion, le procédé d'installation comporte une étape de dissociation qui consiste à dissocier, d'une part, la partie externe (6) d'au moins une tige flexible (3, 3a, 3b), selon le cas, que la première partie d'armature (240) ou que l'armature tubulaire (26) comporte et, d'autre part, la partie externe (6) d'au moins une autre tige flexible (4, 4a, 4b), selon le cas, que la deuxième partie d'armature (242) ou que l'armature tubulaire (26) comporte.
